# EUROPÄISCHE PATENTSCHRIFT

(11) **EP 4 334 529 B1**
(45) Veröffentlichungstag und Bekanntmachung des Hinweises auf die Patenterteilung: **25.06.2025**
(21) Anmeldenummer: 22727237.4
(22) Anmeldetag: 06.05.2022
(51) Int. Cl.: E01B 35/06, B61K 9/08, B61L 15/00, B61L 23/04

(54) **VERFAHREN UND VORRICHTUNG ZUM ERMITTELN DER OBERFLÄCHENBESCHAFFENHEIT AN ZUMINDEST EINEM SCHIENENKOPF**
METHOD AND DEVICE FOR ASCERTAINING THE SURFACE QUALITY OF AT LEAST ONE RAIL HEAD
PROCÉDÉ ET DISPOSITIF DE DÉTERMINATION DE LA QUALITÉ DE SURFACE D'AU MOINS UN CHAMPIGNON DE RAIL

(30) Priorität: 06.05.2021 AT 503482021
(43) Veröffentlichungstag der Anmeldung: 13.03.2024
(73) Patentinhaber: MATE GmbH, 4656 Kirchham bei Vorchdorf (AT)
(72) Erfinder: LACKNER, Moritz, 4644 Scharnstein (AT); MIHALIC, Daniel Ludwig, 4662 Steyrermühl (AT); HASELSTEINER-RAFETSEDER, Philipp, 3363 Hausmening (AT)
(74) Vertreter: Burger, Hannes
(86) Internationale Anmeldenummer: PCT/AT2022/060160
(87) Internationale Veröffentlichungsnummer: WO 2022/232860

(56) Entgegenhaltungen:
- DE-A1- 2 617 192
- DE-A1- 3 047 667
- DE-A1- 4 237 713

## Beschreibung

Die Erfindung betrifft ein Verfahren zum Ermitteln der Oberflächenbeschaffenheit an zumindest einem Schienenkopf, insbesondere an dessen Lauffläche, entlang eines verlegten und von Schienen gebildeten Schienenstrangs. Weiters betrifft die Erfindung auch noch eine mobile Messanlage, welche zur Ermittlung der Oberflächenbeschaffenheit an zumindest einem Schienenkopf, insbesondere an dessen Lauffläche, entlang eines verlegten und von Schienen gebildeten Schienenstrangs ausgebildet ist.

Aus der DE 42 37 713 A1 ist eine gattungsgemäß ausgebildete Messanordnung zum kontinuierlichen Messen von wellenförmigen Unebenheiten einer Schiene bekannt geworden. Die Messanordnung umfasst auf dem Gleis abrollbare Spurkranzräder sowie einen Messwagen mit einem Wagenrahmen und einem am Wagenrahmen angeordneten Abstandsdetektor zur berührungslosen Messung des Abstandes von der Schiene. Der als berührungslos arbeitende und als Laserdistanzmesser ausgebildete Abstandsdetektor ist über eine Signalleitung mit einer Vorrichtung zum Aufzeichnen, Verarbeiten und Ausgeben von Messsignalen verbunden. Eines der Spurkranzräder ist als Wegmessrad ausgebildet und mit einem Prioritätsencoder zur Abgabe von Wegimpulsen ausgestattet, die über eine Signalleitung ebenfalls an die Vorrichtung zur Verarbeitung weitergeleitet werden. Weiters ist der Abstandsdetektor in einer mit dem Wagenrahmen verbundenen Linearführung in vertikaler Richtung zum Wagenrahmen verschiebbar sowie schwingungsgedämpft gelagert. Der Abstandsdetektor ist mit einer Hilfsmasse verbunden, welche ihrerseits mittels einer weichen Feder, insbesondere Luftfeder, und eines Dämpfers auf der Linearführung vertikal verschiebbar gelagert ist. Aufgrund von auftretenden Schwingungen und der damit verbundenen freien Relativbewegung des Sensors bezüglich der Messfläche an den Schienen kam es zu Ungenauigkeiten oder einem Verstellen außerhalb des Messbereiches.

Die DE 100 03 675 A1 beschreibt eine Vorrichtung zur Messung der Fahrflächenrauheit von Schienen im Fahrbetrieb. Die Vorrichtung umfasst einen Abstandsmesskopf mit einer Strahlungsquelle und einem Strahlungsdetektor, wobei mit der Strahlungsquelle die betreffende Fahrfläche mit elektromagnetischer Strahlung beaufschlagbar ist und mit dem Strahlungsdetektor die von der betreffenden Fahrfläche zurückgeworfene Strahlung detektierbar ist. Weiters verfügt die Vorrichtung über einen Sollhöhengeber, der ein einer Sollhöhe entsprechendes Sollsignal für ein Regelmodul liefert. Das Regelmodul ist über einen Digital/Analogwandler sowie einen zweiten Steuersignalwandler an einen Verstellmotor der Vertikal-Verstelleinheit angeschlossen. Der Abstandsmesskopf ist über einen ersten Analog/Digitalwandler an das Regelmodul angeschlossen, dem somit als Ist-Signal der tatsächliche Abstand des Abstandsmesskopfs von der Oberfläche der Fahrfläche einspeisbar ist. Mit dem Regelmodul sind dem Verstellmotor der Vertikal-Verstelleinheit Regelsignale mit einer gegenüber der Rauigkeit der Fahrfläche großen Mittelungszeit zur Einhaltung eines mittleren Abstandes zu der Fahrfläche innerhalb einer gewissen Variationsbreite um die Sollhöhe einspeisbar. Es konnte bei den Messvorgängen nicht immer die Distanz zwischen der Strahlungsquelle und der Schienenoberfläche in einem exakt vorgegebenen Abstand eingehalten werden.

Die DE 2617192 A1 offenbart ein Verfahren zur Messung vertikaler Verformungen von Eisenbahngeleisen durch Ver-schiebung einer Einrichtung mit Schienenabtastern als Messbasis in Schienenlängsrichtung, um die Veränderung der Wellentiefe bei jedem Schienenstrang zu messen. Es werden gleichzeitig mehrere Messbasen mit abnehmender Messlänge verwendet, die in einer Weise gestaffelt werden, dass beim Auswerten der von den entsprechenden Tastern jeder aufeinander folgenden Messbasis gemessenen Tiefen wenigstens teilweise die Messlücken ausgefüllt werden, welche bei der oder den vorhergehenden Messbasen bei gewissen Wellenlängen auftreten, wobei schließlich eine echte Fehleranzeige für alle gewünschten Wellenlängen der vertikalen Verformungen erhalten werden.

Die EP 0 986 732 B1 beschreibt ein Verfahren sowie eine Messvorrichtung zur Messung von durch Riffel und/oder lange Wellen gebildeten Unebenheiten in der Oberfläche eines Objektes von einer Messplattform aus, wobei die Messplattform und das Objekt relativ zueinander bewegt werden. Die Messvorrichtung ist hierzu auf der Messplattform installiert, die längs der Schiene mit einer beliebigen Geschwindigkeit verfahren wird, wobei die Messplattform mit Messvorrichtung an der Unterseite eines angetriebenen oder gezogenen Messwagens installiert ist. Für eine genaue Aussage über die Fahrflächenunebenheiten ist es erforderlich, dass die Messung im festen Abstand zur Schieneninnenkante erfolgt. Die Messplattform ist ihrerseits in der Querschnittsprofilebene der Schiene beweglich am Messwagen positioniert, so dass sie relativ zur Schiene in Vertikalrichtung und quer zur Schienenlängsrichtung bewegt werden kann. Auf der Messplattform ist zusätzlich eine Positionssensorik angeordnet, deren Ausgangssignal an einen Steuerrechner gelegt ist. Der Steuerrechner ist ausgangsseitig mit einem Antriebssystem verbunden, mittels welchem die Messplattform in Vertikalrichtung und/oder quer zur Schienenlängsrichtung um vorgegebene Wegstrecken verstellt werden kann. Es konnte auch hier bei den Messvorgängen nicht immer der exakte Abstand zwischen der Messvorrichtung und der Schienenoberfläche eingehalten werden.

Aufgabe der vorliegenden Erfindung war es, die Nachteile des Standes der Technik zu überwinden und ein Verfahren und eine mobile Messanlage zur Verfügung zu stellen, mittels derer ein Benutzer in der Lage ist, eine sichere und ständig exakte Positionierung des zumindest einen Sensors oberhalb des Längsprofils der Schiene während der Verlagerung der Messanlage entlang der Schienen sicherzustellen.

Diese Aufgabe wird durch ein Verfahren und eine Messanlage zum Ermitteln oder zur Ermittlung der Oberflächenbeschaffenheit an zumindest einem Schienenkopf gemäß den Ansprüchen gelöst.

Das erfindungsgemäße Verfahren dient zum Ermitteln der Oberflächenbeschaffenheit an zumindest einem Schienenkopf, insbesondere an dessen Lauffläche, entlang eines verlegten und von Schienen gebildeten Schienenstrangs. Zu besseren und leichteren Definition von unterschiedlichen Raumrichtungen erfolgt die Angabe oder Definition von jeweils zumindest einer von der jeweiligen Schiene definierten Schienenebene, welche in weiterer Folge eine jeweilige Bezugsebene, insbesondere für die Relativverstellung des Mess-Basisträgers bezüglich des Wagenrahmens, bildet. Bei einer zueinander waagrechten und auch lotrechten Anordnung der beiden zusammengehörigen Schienen sind die Schienenebenen in der gemeinsamen Horizontalebene verlaufend angeordnet. Je nach Querschnittsform der Schiene kann die jeweilige Schienenebene eine an den jeweils zu ermittelnden Oberflächen-Längsabschnitt anliegende Tangentialebene darstellen. Dies insbesondere dann, wenn die Schiene in deren Querschnitt gesehen eine gekrümmt ausgebildete Lauffläche aufweist.

Zur Durchführung des Ermittlungs- und/oder Messverfahrens sind folgende Schritte vorgesehen:
- Es wird ein Messwagen mit einem Wagenrahmen und am Wagenrahmen drehbar gelagerten Laufrädern bereitgestellt, wobei der Wagenrahmen mittels der Laufräder auf zumindest einer der Schienen abgestützt wird und entlang der Schienen verlagerbar ist,
- Weiters wird eine Messeinheit mit zumindest einer ersten Messanordnung mit einem Mess-Basisträger, einer Führungsanordnung und zumindest einem ersten Sensor bereitgestellt, welcher zumindest eine erste Sensor am Mess-Basisträger angeordnet wird. Die Führungsanordnung ist ihrerseits am Wagenrahmen angeordnet, wobei weiters der Mess-Basisträger mittels der Führungsanordnung bevorzugt in normaler Ausrichtung bezüglich der jeweiligen Schienenebene relativ bezüglich des Wagenrahmens verlagerbar geführt wird, und
- Verlagern des Messwagens entlang der Schienen. Während der Verlagerungsbewegung entlang der Schienen erfolgt das Ermitteln der Oberflächenbeschaffenheit an zumindest einem Schienenkopf von zumindest einer Schiene. Weiters ist dabei noch vorgesehen
- dass der Mess-Basisträger mitsamt dem zumindest einen ersten Sensor während der Verlagerung des Messwagens entlang der Schienen mittels einer Abstützvorrichtung mechanisch auf oder an der zumindest einen Schiene abgestützt wird, und
- dass der zumindest eine erste Sensor während der Verlagerung des Messwagens mittels der Abstützvorrichtung und bezüglich der jeweiligen Abstützposition der Abstützvorrichtung auf der Schiene stets in einem vorbestimmten, fixen Abstand oberhalb der Schiene entlanggeführt wird.

Vorteilhaft ist bei den hier gewählten Verfahrensschritten, dass so stets sichergestellt wird, dass der Mess-Basisträger mit dem daran befindlichen Sensor direkt auf mechanischer Basis auf der Schienen-Fahrfläche abgestützt und an dieser entlanggeführt wird. Durch das direkte, körperliche Abstützen wird so eine exakte Messung stets innerhalb des vom Sensor definierten Messbereichs sichergestellt. Der Messwagen wird mittels seiner Laufräder an der Schiene abgestützt, wobei die am Wagenrahmen gehaltenen Laufräder in Schienenlängsrichtung gesehen in einem vorbestimmten Abstand voneinander beabstandet angeordnet sind. Zumeist erfolgt dies in Fahrtrichtung gesehen im vorderen und hinteren Endbereich des Wagenrahmens. Je länger der Abstand gewählt wird, wird für den Messwagen eine ausreichend parallele Ausrichtung bezüglich der Schienenlängserstreckung erzielt. Damit werden auch zu starke Kippbewegungen des Messwagens während der Messfahrt durch mögliche Unebenheiten oder Abweichungen von einer gedachten Geraden zum größten Anteil verhindert.

Weiters ist ein Vorgehen vorteilhaft, bei dem die Abstützvorrichtung des Mess-Basisträgers von zumindest einem Abstützrad gebildet wird. Damit kann eine leichtgängige und sichere Abstützung erzielt werden. Weiters kann so auch ein Anhaften der Abstützvorrichtung an der Schienenoberfläche verhindert werden, was bei der Vorwärtsbewegung zum Aufbau von zusätzlichen Schwingungen oder Vibrationen und damit zu ungenauen Messergebnissen führen kann. Weiters kann durch die in Richtung der Drehachse gesehen nahezu oder annähern linienförmige oder punktförmige Abstützung des Rades an der Schienenoberfläche die Genauigkeit des Messergebnisses verbessert werden.

Eine weitere vorteilhafte Vorgehensweise ist dadurch gekennzeichnet, dass das zumindest eine Abstützrad von einem Kugellager gebildet wird und das Kugellager an seiner umlaufenden äußeren Oberfläche mit einer Dämpfungsschicht, insbesondere aus einem elastomeren Werkstoff, versehen ist. Damit kann eine hohe Führungsgenauigkeit erzielt und auch eine Schwingungsübertragung von der Schiene auf die Abstützvorrichtung und in weiterer Folge auch auf den Sensor reduziert oder überhaupt verhindert werden.

Vorteilhaft ist auch eine Verfahrensvariante, bei welcher die Laufräder des Messwagens von Kugellagern gebildet werden und die Kugellager an ihren umlaufenden äußeren Oberflächen jeweils mit einer Dämpfungsschicht, insbesondere aus einem elastomeren Werkstoff, versehen sind. So kann auch die Schwingungsübertragung von der Schiene auf den gesamten Messwagen reduziert oder überhaupt verhindert werden.

Erfindungsgemäß ist vorgesehen, dass die Laufräder in Richtung der Fortbewegungsrichtung des Messwagens jeweils paarweise hintereinander am Messwagen angeordnet werden und von diesen jeweils ein erstes Laufradpaar und zumindest ein zweites Laufradpaar gebildet wird. Damit kann die Abstützlast je Laufrad reduziert werden. Weiters kann damit aber auch die Exaktheit der Parallelführung des Messwagens an der Schienenoberfläche während der Messfahrt verbessert werden. Zusätzlich kann so aber auch eine bessere und vor allem verkippungssicherere Messfahrt des Messwagens entlang der Schiene erzielt werden.

Das erste Laufradpaar ist in der Fortbewegungsrichtung des Messwagens in einem ersten Achsabstand voneinander angeordnet und das zweite Laufradpaar ist in der gleichen Richtung in einem zweiten Achsabstand voneinander angeordnet, wobei erfindungsgemäß der erste Achsabstand und der zweite Achsabstand zueinander um zumindest 20% unterschiedlich gewählt werden. Damit kann eine noch bessere und konstantere Führungsgenauigkeit entlang einer gedachten Geraden in Richtung der Schienenlängserstreckung erzielt werden.

Erfindungsgemäß ist vorgesehen, dass vom Verhältnis der beiden Achsabstände zueinander keine natürliche Zahl gebildet wird. So können Vibrationen während der Messfahrt noch besser minimiert oder überhaupt verhindert werden, wodurch ein noch besseres und genaueres Messergebnis erzielt werden kann.

Weiters ist ein Vorgehen vorteilhaft, bei dem vom zumindest einen ersten Sensor die Oberflächenrauigkeit an einer der Schienen ermittelt wird. Damit können erste Messwerte für die Oberflächenbeschaffenheit der Schiene an deren Fahrfläche ermittelt werden.

Eine weitere vorteilhafte Vorgehensweise ist dadurch gekennzeichnet, dass die erste Messanordnung mit zumindest einem zweiten Sensor ausgestattet wird und während der Verlagerung des Messwagens entlang der Schienen vom zumindest einen zweiten Sensor die Relativverlagerung des zumindest einen ersten Sensors bezüglich des Wagenrahmens des Messwagens ermittelt wird. Durch das zusätzliche Vorsehen eines zweiten Sensors kann so in Verbindung mit der Wegstreckenmessung eine vorhandene Welligkeit in Schienenlängsrichtung ermittelt werden. Die Relativbewegung des ersten Sensors, welcher am Mess-Basisträger angeordnet bzw. befestigt ist, bezüglich des Messwagens bildet das Längsprofil im Kontakt- oder Anlagebereich der Abstützvorrichtung an der Schiene ab.

Vorteilhaft ist auch eine Verfahrensvariante, bei welcher während der Verlagerung des Messwagens entlang der Schienen die vom Messwagen zurückgelegte Wegstrecke mittels einer Wegmessvorrichtung der Messeinheit ermittelt wird. Damit können die jeweils ermittelten Messwerte einer exakten Längsposition an der Schiene zugeordnet werden. Weiters kann auch noch die Wellenform der Schienenoberfläche entlang des Schienen-Längsprofils exakt abgebildet werden.

Eine andere Vorgehensweise zeichnet sich dadurch aus, wenn die Wegmessvorrichtung von einem eigenen Wegmessrad und/oder von einem der Laufräder und/oder von dem zumindest einen die Abstützvorrichtung bildenden Abstützrad gebildet oder definiert wird.

Weiters ist ein Vorgehen vorteilhaft, bei dem die Messeinheit weiters mit zumindest einer zweiten Messanordnung ausgestattet wird und die zweite Messanordnung gleichartig wie die erste Messanordnung ausgebildet wird und von den beiden Messanordnungen jeweils die Oberflächenbeschaffenheit von zumindest einer der beiden Schienen ermittelt wird. Damit wird die Möglichkeit geschaffen, z.B. entlang beider Schienen des zusammengehörigen Schienenstrangs das Ermitteln der unterschiedlichen Messwerte oder Parameter für die Oberflächenbeschaffenheit gleichzeitig in einer Messfahrt durchführen zu können. Es wäre aber noch möglich, die Messanordnungen hintereinander anzuordnen und diese an der jeweils gegenüberliegend befindlichen Schiene z.B. mit einer Stützrolle abzustützen, um ein Kippen zu verhindern.

Eine weitere vorteilhafte Vorgehensweise ist dadurch gekennzeichnet, dass die von der Messeinheit ermittelten Messwerte an eine Auswertevorrichtung übertragen oder weitergeleitet werden und von den Messwerten ein Auswerte- oder Messprotokoll generiert wird. Damit kann ein Nachweis von der ermittelten Oberflächenbeschaffenheit mit deren unterschiedlichen Messwerten bereitgestellt werden.

Vorteilhaft ist auch eine Verfahrensvariante, bei welcher das Ermitteln der Oberflächenbeschaffenheit unmittelbar nachfolgend an einen Bearbeitungsvorgang an der zumindest einen Schiene durchgeführt wird. Damit kann unmittelbar im Anschluss an den Vorgang des Bearbeitens oder Nacharbeitens, insbesondere des Reprofilierens, der zumindest einen Schiene das Ergebnis und die hergestellte Qualität festgestellt werden.

Die Aufgabe der Erfindung wird aber eigenständig auch durch eine Messanlage zum Ermitteln der Oberflächenbeschaffenheit an zumindest einem Schienenkopf gelöst. Die Messanlage ist dazu ausgebildet, insbesondere an der Lauffläche entlang eines verlegten und von Schienen gebildeten Schienenstrangs das Ermitteln durchzuführen und Messwerte dabei zu bilden. Von den beiden in Querrichtung nebeneinander befindlichen Schienen wird jeweils zumindest eine Schienenebene definiert, welche bei einer zueinander waagrechten und auch lotrechten Anordnung der beiden zusammengehörigen Schienen in der gemeinsamen Horizontalebene verlaufend angeordnet sind. Die Messanlage kann insbesondere zur Durchführung des Verfahrens zum Ermitteln der Oberflächenbeschaffenheit dienen und umfasst
- einen Messwagen mit einem Wagenrahmen und am Wagenrahmen drehbar gelagerten Laufrädern, wobei der Wagenrahmen mittels der Laufräder auf den Schienen abstützbar und entlang der Schienen verlagerbar ist,
- eine Messeinheit mit zumindest einer ersten Messanordnung mit einem Mess-Basisträger, einer Führungsanordnung und zumindest einem ersten Sensor, welcher zumindest eine erste Sensor am Mess-Basisträger angeordnet ist und die Führungsanordnung ihrerseits am Wagenrahmen angeordnet ist, wobei weiters der Mess-Basisträger mittels der Führungsanordnung bevorzugt in normaler Ausrichtung bezüglich der Schienenebene relativ bezüglich des Wagenrahmens verlagerbar geführt ist, wobei weiters noch vorgesehen ist
- dass der Mess-Basisträger mitsamt dem zumindest einen ersten Sensor zum Ermitteln der Oberflächenbeschaffenheit mittels einer Abstützvorrichtung mechanisch auf zumindest einer der Schienen abstützbar ist, und
- dass der zumindest eine erste Sensor während der Verlagerung des Messwagens mittels der Abstützvorrichtung und bezüglich der jeweiligen Abstützposition der Abstützvorrichtung auf der Schiene stets in einem vorbestimmten, fixen Abstand oberhalb der Schiene entlangführbar ist.

Der dadurch erzielte Vorteil liegt darin, dass so stets sichergestellt wird, dass der Mess-Basisträger mit dem daran befindlichen Sensor direkt auf mechanischer Basis auf der Schienen-Fahrfläche abgestützt und an dieser entlanggeführt werden kann. Durch das direkte, körperliche Abstützen wird so eine exakte Messung stets innerhalb des vom Sensor definierten Messbereichs sichergestellt. Der Messwagen wird mittels seiner Laufräder an der Schiene abgestützt, wobei die Laufräder in Schienenlängsrichtung in einem vorbestimmten Abstand voneinander beabstandet angeordnet sind. Je länger der Abstand gewählt wird, wird für den Messwagen eine ausreichend parallele Ausrichtung bezüglich der Schienenlängserstreckung erzielt. Damit werden auch zu starke Kippbewegungen des Messwagens während der Messfahrt durch mögliche Unebenheiten oder Abweichungen von einer gedachten Geraden verhindert.

Weiters kann es vorteilhaft sein, wenn die Abstützvorrichtung für den Mess-Basisträger zumindest ein Abstützrad umfasst. Damit kann eine leichtgängige und sichere Abstützung erzielt werden. Weiters kann so auch ein Anhaften der Abstützvorrichtung an der Schienenoberfläche verhindert werden, was bei der Vorwärtsbewegung zum Aufbau von zusätzlichen Schwingungen oder Vibrationen und damit zu ungenauen Messergebnissen führen kann. Weiters kann durch die nahezu linienförmige Abstützung des Rades an der Schienenoberfläche die Genauigkeit des Messergebnisses verbessert werden.

Eine andere Ausführungsform zeichnet sich dadurch aus, dass das zumindest eine Abstützrad von einem Kugellager gebildet ist und das Kugellager an seiner umlaufenden äußeren Oberfläche mit einer Dämpfungsschicht, insbesondere aus einem elastomeren Werkstoff, versehen ist. Damit kann eine hohe Führungsgenauigkeit erzielt und auch eine Schwingungsübertragung von der Schiene auf die Abstützvorrichtung und in weiterer Folge auch auf den Sensor reduziert oder überhaupt verhindert werden.

Eine weitere mögliche Ausführungsform hat die Merkmale, dass die Laufräder des Messwagens von Kugellagern gebildet sind und die Kugellager an ihren umlaufenden äußeren Oberflächen jeweils mit einer Dämpfungsschicht, insbesondere aus einem elastomeren Werkstoff, versehen sind. So kann auch die Schwingungsübertragung von der Schiene auf den gesamten Messwagen reduziert oder überhaupt verhindert werden.

Erfindungsgemäß ist vorgesehen, dass die Laufräder in Richtung der Fortbewegungsrichtung des Messwagens jeweils paarweise hintereinander am Messwagen angeordnet sind und von diesen jeweils ein erstes Laufradpaar und zumindest ein zweites Laufradpaar gebildet ist. Damit kann die Abstützlast je Laufrad reduziert werden. Weiters kann damit aber auch die Exaktheit der Parallelführung des Messwagens an der Schienenoberfläche während der Messfahrt verbessert werden. Zusätzlich kann so aber auch eine bessere und vor allem verkippungssicherere Messfahrt des Messwagens entlang der Schiene erzielt werden.

Das erste Laufradpaar ist in der Fortbewegungsrichtung des Messwagens in einem ersten Achsabstand voneinander angeordnet und das zweite Laufradpaar ist in der gleichen Richtung in einem zweiten Achsabstand voneinander angeordnet, wobei erfindungsgemäß der erste Achsabstand und der zweite Achsabstand zueinander um zumindest 20% unterschiedlich gewählt sind. Damit kann eine noch bessere und konstantere Führungsgenauigkeit entlang einer gedachten Geraden in Richtung der Schienenlängserstreckung erzielt werden.

Die erfindungsgemäße Ausführungsform ist dadurch gekennzeichnet, dass das Verhältnis der beiden Achsabstände zueinander keine natürliche Zahl bildet. Damit können Vibrationen des Messwagens während der Messfahrt minimiert werden.

Eine weitere Ausbildung sieht vor, dass der zumindest eine erste Sensor zur Ermittlung der Oberflächenrauigkeit an einer der Schienen ausgebildet ist. Damit können erste Messwerte für die Oberflächenbeschaffenheit der Schiene an deren Fahrfläche ermittelt werden.

Eine andere Ausführungsform zeichnet sich dadurch aus, dass die erste Messanordnung zumindest einen zweiten Sensor umfasst und der zumindest eine zweite Sensor dazu ausgebildet ist, die Relativverlagerung des zumindest einen ersten Sensors bezüglich des Wagenrahmens des Messwagens während der Verlagerung des Messwagens entlang der Schienen zu ermitteln. Durch das zusätzliche Vorsehen eines zweiten Sensors kann so in Verbindung mit der Wegstreckenmessung eine vorhandene Welligkeit in Schienenlängsrichtung ermittelt werden. Die Relativbewegung des ersten Sensors, welcher am Mess-Basisträger angeordnet bzw. befestigt ist, bezüglich des Messwagens bildet das Längsprofil im Anlagebereich der Abstützvorrichtung an der Schiene ab.

Eine weitere bevorzugte Ausführungsform ist dadurch gekennzeichnet, dass die Messeinheit weiters eine Wegmessvorrichtung umfasst und die Wegmessvorrichtung dazu ausgebildet ist, die vom Messwagen zurückgelegte Wegstrecke während der Verlagerung des Messwagens entlang der Schienen zu ermitteln. Damit können die jeweils ermittelten Messwerte einer exakten Längsposition an der Schiene zugeordnet werden. Weiters kann auch noch die Wellenform der Schienenoberfläche entlang des Schienen-Längsprofils exakt abgebildet werden.

Weiters kann es vorteilhaft sein, wenn die Messeinheit weiters eine zweite Messanordnung umfasst und die zweite Messanordnung gleichartig wie die erste Messanordnung ausgebildet ist. Damit wird die Möglichkeit geschaffen, z.B. entlang beider Schienen des zusammengehörigen Schienenstrangs das Ermitteln der unterschiedlichen Messwerte oder Parameter für die Oberflächenbeschaffenheit gleichzeitig in einer Messfahrt durchführen zu können. Es wäre aber noch möglich, die Messanordnungen hintereinander anzuordnen und diese an der jeweils gegenüberliegend befindlichen Schiene z.B. mit einer Stützrolle abzustützen, um ein Kippen zu verhindern.

Zum besseren Verständnis der Erfindung wird diese anhand der nachfolgenden Figuren näher erläutert.

Es zeigen jeweils in stark vereinfachter, schematischer Darstellung:
- Fig. 1: einen Schienenstrang mit einem möglichen Profil der Schienen, im Querschnitt und vergrößerter Darstellung;
- Fig. 2: eine Messanlage mit einem Messwagen und einer Messeinheit mit auf mechanischer Basis abgestützten ersten Sensor auf der Schiene im Zuge einer Messfahrt, in Seitenansicht;
- Fig. 3: einen Schienenquerschnitt mit in Querrichtung nebeneinander befindlichen Messbahnen;
- Fig. 4: einen Querschnitt des Schienenstrangs mit jeweils einer Messanordnung an jeweils einer Schiene;
- Fig. 5: eine mögliche Variante des Messwagens der Messanlage nach Fig. 2 mit einer übertrieben dargestellten Schienenoberfläche in Richtung von deren Längserstreckung, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der weitere allgemeine Begriff des "Rades" umfasst alle drehbar gelagerten Gegenstände, insbesondere in scheibenform oder walzenform, mit einer idealerweise kreisförmigen Umrisskontur. Je nach Dicke des Rades in Richtung seiner Drehachse kann dieses als Scheibe oder als Walze ausgebildet sein. Die drehbar gelagerten Gegenstände sind ihrerseits um eine Drehachse drehbar gelagert, wobei die Drehachse eine normale Ausrichtung bezüglich der idealisierten Kreisebene aufweist. Das Rad kann z.B. einen festen und stabilen Radkörper sowie eine an der Umrisskontur angeordnete Beschichtung oder eine eigene Dämpfungslage umfassen. Es wäre auch noch möglich, den überwiegenden Anteil des Rades aus einem elastomeren Werkstoff zu bilden.

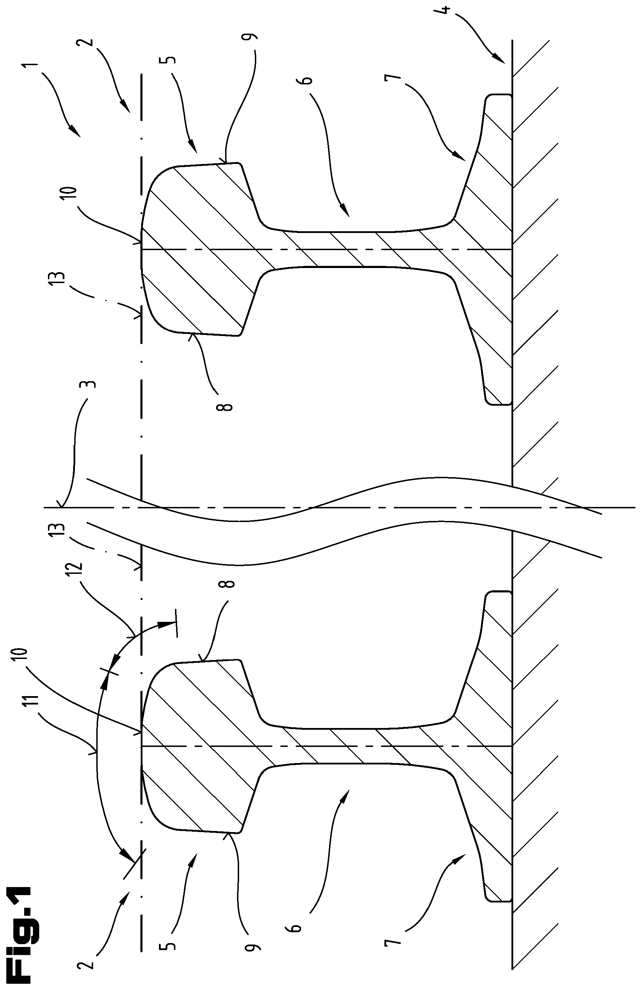

Die Fig. 1 zeigt einen Querschnitt durch einen Schienenstrang 1 umfassend zumindest ein Paar von Schienen 2, welche Schienen 2 parallel zueinander im Abstand einer Spurweite voneinander distanziert angeordnet sind. Die Schienen 2 sind in regelmäßigen, bevorzugt kurzen Abständen zumeist auf quer zu einer Gleisachse 3 ausgelegten Schwellen 4 aus Beton, Stahl, Holz oder Kunststoff befestigt, wobei hier auf die Darstellung von Befestigungselementen verzichtet worden ist. Die Gleisachse 3 bildet eine Mittelachse aus, wobei bei einer horizontalen Anordnung der beiden Schienen 2 zueinander in der Mittelachse auch eine Mittelebene in vertikaler Ausrichtung verlaufen kann.

Unter dem Begriff der Schiene 2 des Schienenstrangs 1 werden hier alle zur Führung und/oder Abstützung der darauf verfahrbaren Schienenfahrzeuge dienenden Schienenteile oder Schienenabschnitte verstanden. Darunter fallen somit auch Weichen, Schienenkreuzungen und auch nicht geradlinig verlaufende Schienenteile.

Die beiden Schienen 2 definieren an deren Oberseiten oder Oberflächen jeweils eine Schienenebene 13, welche bei der horizontalen Anordnung und auch lotrechten Ausrichtung des Schienenstegs 6 der Schienen 2 zueinander eine gemeinsame Horizontalebene bilden oder definieren. Die Schienenebene 13 ist mittels einer strich-punktierten Linie angedeutet. Die durch die Gleisachse 3 verlaufende Mittelebene weist ihrerseits eine normale Ausrichtung bezüglich der Schienenebene 13 auf und schließt mit dieser zumeist oder bevorzugt einen Winkel von 90°, also einen rechten Winkel, ein. Bei einer Querüberhöhung, wie z.B. bei Kurven oder Bögen, weist die Schienenebene 13 eine von der Horizontalebene davon abweichende Ausrichtung auf. Die jeweilige Schienenebene 13 weist je nach Schienen-Längsverlauf auch noch eine gewisse Längserstreckung auf, welche jeweils eine Bezugsebene für die nachfolgende Beschreibung definiert.

Die Schienen 2 des Schienenstrangs 1 bilden als Gleis zusammen mit dem Kleineisen und der Bettung den Oberbau einer Bahnstrecke aus. Grundsätzlich bilden die hier gezeigten und beschriebenen Schienen 2 im Bahnwesen lineare Trag- und Führungselemente und somit den vorgegebenen Fahrweg für darauf befindliche Schienenfahrzeuge. Dabei sei erwähnt, dass der Querschnitt der Schienen 2 unterschiedlichst ausgebildet sein kann und dieser Querschnitt nur beispielhaft gewählt wurde.

Jede der Schienen 2 umfasst in ihrem Querschnitt gesehen einen Schienenkopf 5, einen Schienensteg 6 und einen Schienenfuß 7. Der Schienenkopf 5 ist dabei vom Schienensteg 6 getragen und der Schienenfuß 7 ist seinerseits an der Schwelle 4 oder einem sonstigen Auflager bzw. Untergrund befestigt.

Der Teil des Schienenkopfs 5, der von hier nicht dargestellten Rädern eines Schienenfahrzeuges berührt werden kann, wird in diesem Zusammenhang als Lauffläche 10 bezeichnet. Die nicht dargestellten Spurkränze der Schienenfahrzeuge sind jeweils an einander zugewendeten Seiten der Schienen 2 angeordnet, wobei dies auch jene Seiten sind, welche der Gleisachse 3 bzw. einer Gleismitte zugewendet sind. Der Schienenkopf 5 ist seitlich durch eine innere Seitenfläche 8 und eine dieser gegenüberliegend angeordnete äußere Seitenfläche 9 begrenzt. Der sich im Querschnitt gesehen zwischen den Seitenflächen 8 und 9 erstreckende Profilabschnitt kann im weitesten Sinn als Lauffläche 10 der Schiene 2 bezeichnet werden. Die Lauffläche 10 jeder Schiene 2 kann sich aus einer Fahrfläche 11 und einer Fahrkante 12 zusammensetzen. Die Fahrfläche 11 ist dabei an einer Oberseite des Schienenkopfs 5 verlaufend angeordnet, wobei die Fahrkante 12 den Übergang zur inneren Seitenfläche 8 bildet, welche der Gleismitte bzw. der Gleisachse 3 zugewendet ist.

An der Lauffläche 10 von verlegten Schienen 2 entstehen mit der Zeit Schäden, wie beispielsweise Korrosion, Verschleiß, Risse, Fahrflächenfehler wie Riffel, Wellen, Radschleuderstellen, Grübchenbildung, Querprofilveränderungen wie Abflachungen der bombierten Fahrfläche, Grate, Wülste oder dergleichen. Die Verschleißerscheinungen und/oder Schäden, die sich im Wesentlichen im Querschnitt gesehen auf den äußersten Randbereich der Lauffläche 10 beschränken, können mittels der unterschiedlichsten Bearbeitungsvorgänge der Schiene 2 großteils beseitigt werden. Zumeist wird durch ein spanabhebendes Bearbeitungsverfahren das verschlissene bzw. beschädigte Material des Schienenkopfs 5 an der Oberfläche der Schiene 2 entfernt und der bearbeitete Schienenkopf 5 soweit als möglich wieder an ein Sollprofil der Schiene 2 angenähert. Dieser Bearbeitungsvorgang kann auch als Reprofilierungsvorgang bezeichnet werden.

Beim Bearbeiten und/oder Profilieren und/oder Reprofilieren der Lauffläche 10, insbesondere deren Fahrfläche 11 und/oder Fahrkante 12, kann sich die Bearbeitung auch über die Fahrkante 12 hinaus über die innere Seitenfläche 8 erstrecken. Es wäre aber auch möglich, die Bearbeitung eventuell auch über die Fahrfläche 11 hinaus über die äußere Seitenfläche 9 durchzuführen. Die möglichen Bearbeitungsverfahren sind aus dem Stand der Technik allgemein bekannt, wobei z.B. der überwiegende Materialabtrag mittels eines Fräsvorgangs durchgeführt wird, welchem zumeist ein nachfolgender Feinbearbeitungsvorgang folgt.

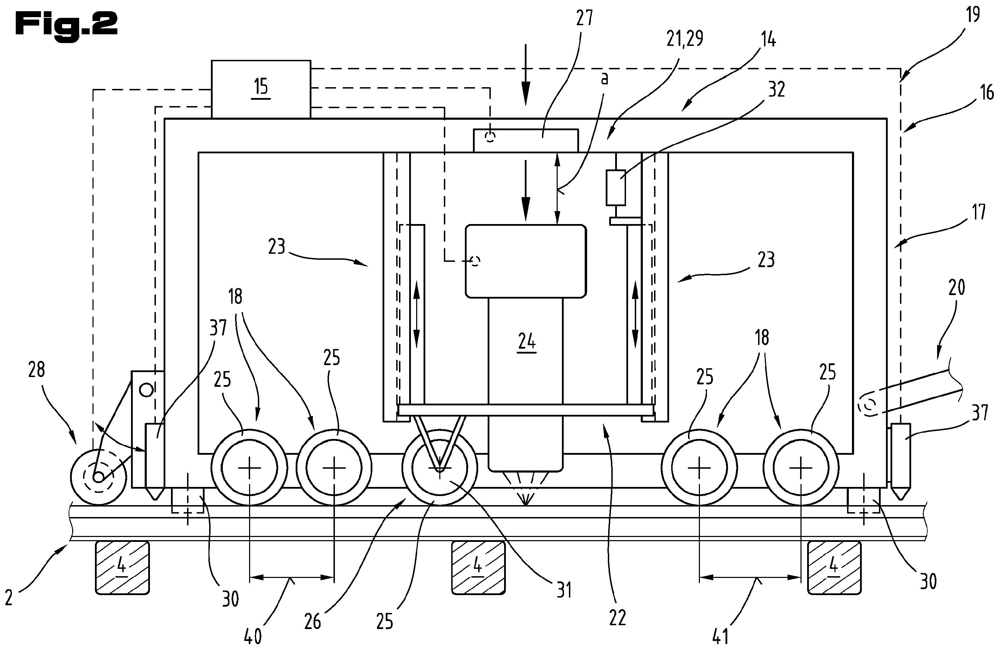

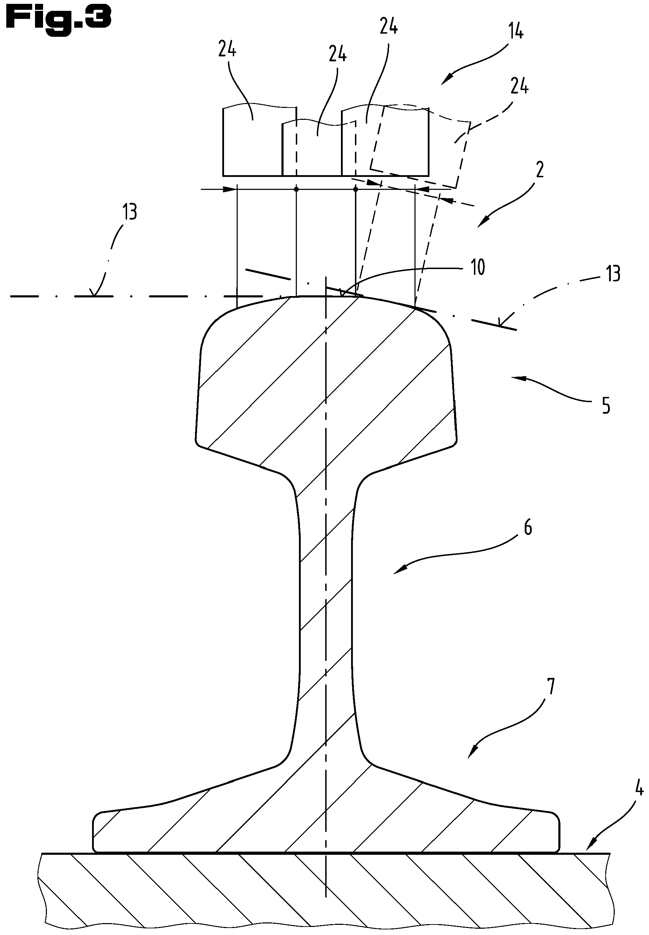

In der Fig. 2 ist eine Messeinheit 14 in einem vereinfachten Schemabild in einer Seitenansicht dargestellt, wobei in der Fig. 3 der Schienenquerschnitt dargestellt ist. Die Messeinheit 14 dient dazu oder ist dazu ausgebildet, entlang der Lauffläche 10 von zumindest einer der Schienen 2, insbesondere jedoch von beiden Schienen 2 des Schienenstrangs 1, deren Oberflächenbeschaffenheit ermitteln zu können. Unter dem Begriff der "Oberflächenbeschaffenheit" werden nicht nur die Oberflächenrauigkeit, sondern auch noch zumindest die Welligkeit der Schienenoberfläche in Richtung von deren Längserstreckung verstanden. Ebenfalls fallen auch noch die zuvor beschriebenen Schäden und/oder plastischen Verformungen des Schienenwerkstoffs darunter, falls die Messfahrt noch vor dem Beginn des Bearbeitungsvorgangs durchgeführt werden sollte.

Unter dem Begriff des "Ermittelns" wird der Vorgang des Messes und/oder Erfassens von einem Messwert und/oder von mehreren Messwerten verstanden. Der oder die unterschiedlichsten Messwerte werden mittels der nachfolgend noch detaillierter beschriebenen Messeinheit 14 ermittelt und gegebenenfalls an eine Auswertevorrichtung 15 übertragen oder weitergeleitet. Die Auswertevorrichtung 15 kann direkt am Messwagen 16 und/oder auch an der nicht näher dargestellten Schienen-Bearbeitungsmaschine angeordnet sein. Die jeweiligen Kommunikationsverbindungen mit den Sensoren und/oder Messvorrichtungen wurden in strichlierten Linien angedeutet. In der Auswertevorrichtung 15 können die Messwerte gespeichert und gegebenenfalls ein Auswerte- oder Messprotokoll generiert und ausgegeben werden. Dies kann in elektronischer und/oder ausgedruckter Form erfolgen.

Mittels der Messeinheit 14 kann noch vor dem Bearbeitungsvorgang die jeweilige Oberflächenbeschaffenheit in Bezug auf Schäden und/oder Umformungen durch den Fahrbetrieb ermittelt werden. Weiters kann auch noch die Welligkeit in Richtung der jeweiligen Längserstreckung ermittelt werden. Bevorzugt ist jedoch vorgesehen, das Ergebnis der durchgeführten Bearbeitung, insbesondere der Reprofilierung, an der zumindest einen Schiene 2 zu erheben und gegebenenfalls auch noch für Nachweiszwecke zu dokumentieren.

Der Vorgang des Bearbeitens, insbesondere des Reprofilierens, erfolgt bevorzugt am verlegten Schienenstrang 1 mittels einer mobilen Schienen-Bearbeitungsmaschine während deren Fortbewegung entlang der Schienen 2, wie dies ebenfalls aus dem Stand der Technik hinlänglich als bekannt gilt.

Die Messeinheit 14 kann bevorzugt auf einem Messwagen 16 aufgebaut oder darauf angeordnet sein. Der Messwagen 16 kann seinerseits einen Wagenrahmen 17 und mehrere am Wagenrahmen 17 drehbar gelagerte Laufräder 18 umfassen. Wie vereinfacht angedeutet, ist der Wagenrahmen 17 mittels der Laufräder 18 auf den Schienen 2 abgestützt bzw. abstützbar und entlang der Schienen 2 zur Messfahrt auch verlagerbar. Die Laufräder 18 können weiters jeweils paarweise hintereinander am Messwagen 16 angeordnet sein oder werden, wobei die Laufräderpaare in Längsrichtung voneinander beabstandet angeordnet sein können. Der Messwagen 16 mit seinem Wagenrahmen 17 wird in Querrichtung zwischen den Schienen 2 gesehen mittels der Laufräder 18 auf den Schienen 2 in bevorzugt paralleler Ausrichtung bezüglich der jeweiligen Schienenebene 13 entlanggeführt und auf diesen abgestützt.

Die Laufräder 18 bilden jeweils ein zusammengehöriges und in Richtung der Längserstreckung der Schienen 2 bzw. in der Fortbewegungsrichtung des Messwagens 16 hintereinander angeordnetes Laufradpaar, wobei auf den Achsabstand zwischen den beiden Laufrädern 18 des zusammengehörigen Laufradpaares Bedacht zu nehmen ist. Ein jeweiliger Achsabstand 40, 41 zwischen den jeweils zusammengehörigen Laufradpaaren soll abhängig von der Anzahl der Laufräder 18, deren Durchmesser und/oder der Gesamtlänge des Messwagens 16 gewählt werden. Das hier gezeigte erste Laufradpaar ist im linken Endbereich des Messwagens 16 und das zumindest eine zweite Laufradpaar ist im rechten Endbereich des Messwagens 16 befindlich angeordnet. Es könnten auch mehrere Laufradpaare in Richtung der Längserstreckung der Schienen 2 oder in der Fortbewegungsrichtung des Messwagens 16 hintereinander angeordnet sein oder werden.

So ist vorgesehen, dass ein erster Achsabstand 40 des ersten Laufradpaares bezüglich des in Richtung der Längserstreckung der Schienen 2 oder in der Fortbewegungsrichtung des Messwagens 16 davon beabstandet angeordneten zweiten Laufradpaares mit seinem zweiten Achsabstand 41 um mindestens 20% davon unterschiedlich gewählt ist oder wird. Weiters soll der erste Achsabstand 40 und der zweite Achsabstand 41 kein ganzzahliges Vielfaches voneinander bilden. Damit soll vom Verhältnis der beiden Achsabstände 40, 41 zueinander keine natürliche Zahl gebildet werden.

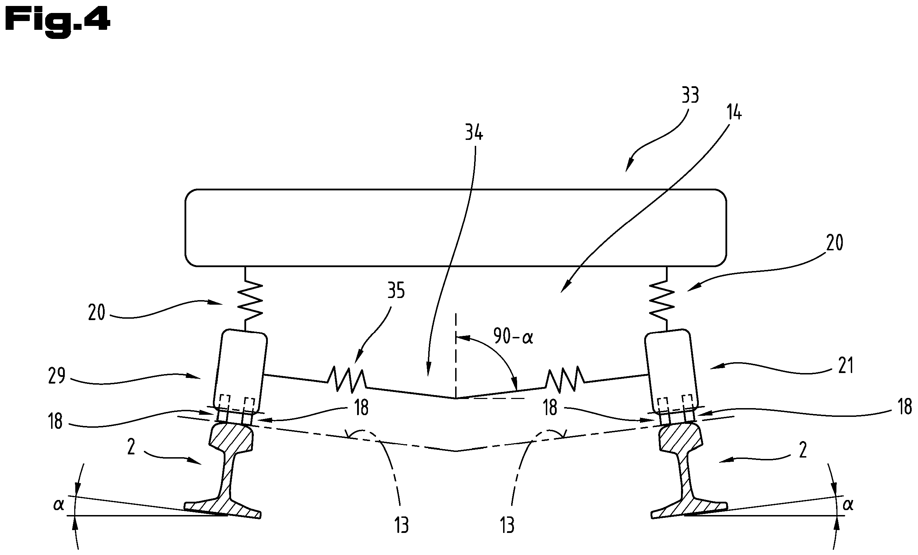

Weiters ist in der nachfolgenden Fig. 4 noch angedeutet, dass in Querrichtung bezüglich der Längserstreckung der Schienen 2 oder in der Fortbewegungsrichtung des Messwagens 16 zusätzlich eine paarweise Anordnung bei bevorzugt jedem der Laufräder 18 nebeneinander erfolgen kann. Die Beabstandung in Querrichtung hängt vom Schienenprofil ab. Die beiden Laufräder 18 können auf einer gemeinsamen körperlichen Laufradachse angeordnet sein. Es wäre aber auch eine Einzellagerung von jedem der Laufräder 18 am Wagenrahmen 17 des Messwagens 16 möglich. Sind ein erstes Laufradpaar und auch ein zweites Laufradpaar in Richtung der Längserstreckung der Schienen 2 oder in der Fortbewegungsrichtung des Messwagens 16 vorgesehen, und erfolgt bei jedem der Laufräder 18 auch eine in Querrichtung gesehen Nebeneinanderanordnung, umfasst das erste und auch das zweite Laufradpaar jeweils insgesamt vier Laufräder 18. Dies kann für jeden Messwagen 16 so vorgesehen sein, wobei die Laufräder 18 jedes Messwagens 16 auf jeweils derselben Schiene 2 abgestützt sind.

Im vorliegend gezeigten Ausführungsbeispiel umfasst eine Messanlage 19 zumindest die Messeinheit 14 und den Messwagen 16 oder wird von diesen gebildet. Der Messwagen 16 mit der Messeinheit 14 kann als eigenständige Baueinheit ausgebildet sein und an der nicht näher dargestellten Schienen-Bearbeitungsmaschine mittels einer Kopplungsvorrichtung 20, wie z.B. einer Kopplungsstange, angekoppelt und so in Bewegungsrichtung damit bewegungsverbunden mitbewegt werden. Um eine Übertragung von Schwingungen ausgehend von der Schienen-Bearbeitungsmaschine oder einem anderen, als Zugmaschine ausgebildeten Schienenfahrzeug kann die Kopplungsvorrichtung 20 selbst aus einem Werkstoff gebildet sein, der schwingungsdämpfende Eigenschaften aufweist. Dies könnte z.B. ein Luftbalg, ein Gummiband oder dergleichen sein. Die Anordnung der gesamten Messanlage 19, insbesondere des Messwagens 16 mit der Messeinheit 14, kann innerhalb oder unterhalb der Schienen-Bearbeitungsmaschine erfolgen oder auch in Fahrtrichtung gesehen nachfolgend an diese vorgesehen sein.

Die Messeinheit 14 umfasst zumindest eine erste Messanordnung 21 mit einem Mess-Basisträger 22, einer Führungsanordnung 23 und zumindest einem ersten Sensor 24. Der zumindest eine erste Sensor 24 ist am Mess-Basisträger 22 angeordnet oder befestigt. Der zumindest eine erste Sensor 24 ist bevorzugt zur Ermittlung der Oberflächenrauigkeit an einer der Schienen 2 ausgebildet. Die Ermittlung des oder der Messwerte soll kontaktlos erfolgen. Dazu kann z.B. ein chromatisch konfokaler Sensor eingesetzt werden, welcher auch als Weißlicht-Sensor bezeichnet werden kann. Derartige Sensoren 24 nutzen die Eigenschaft einer dispersiven Optik aus, um das erzeugte Weißlicht in verschiedene Wellenlängenanteile aufzuspalten und unterschiedlich stark zu brechen. Auf diese Weise ergeben sich mehrere Fokuspunkte in unterschiedlichen Abständen oder Distanzen zum jeweiligen Sensor 24. Je nach Sensor können sich so unterschiedliche Messbereiche und Auflösungen ergeben, wobei der Messbereich in einem Wertebereich mit einer unteren Grenze von 0,1 mm, insbesondere von 1,0 mm, und einer oberen Grenze von 20,0 mm, bevorzugt von 2,0 mm, liegen kann.

Dabei sei erwähnt, dass in Schienenlängsrichtung gesehen bei einer Schiene 2 in Querrichtung derselben auch mehrerer der ersten Sensoren 24 nebeneinander vorgesehen sein können. Je nach Baugröße derselben ist eine unmittelbare Hintereinander-Anordnung von mehreren der ersten Sensoren 24 denkbar und möglich. So können mehrere in Querrichtung nebeneinander befindliche Messbahnen oder Messstreifen an einer der Schienen 2 gebildet werden. Dies ist am besten aus der Fig. 3 zu ersehen, welche eine der Schienen 2 in deren Querschnitt zeigt. Es wurden drei in Querrichtung nebeneinander angeordnete Messbahnen oder Messstreifen angedeutet und mittels Maßpfeilen veranschaulicht. Die ersten Sensoren 24 wurden oberhalb der Lauffläche 10 angedeutet. Die Anordnung der Messbahnen oder Messstreifen an der Schiene 2 ist zumeist in einer Norm festgelegt und deren Anordnung bezüglich eines Bezugsbereichs ist entsprechend diesen Vorgaben einzuhalten.

Die Ausrichtung der Sensoren 24 kann derart erfolgen, dass bevorzugt alle eine normale Ausrichtung bezüglich der hier die Lauffläche 10 an deren höchsten Punkt der Schiene 2 tangierenden Schienenebene 13 aufweisen.

Es wäre aber auch möglich, die von der jeweiligen Schienenebene 13 definierte Bezugsebene im Querschnitt gesehen als Tangentialebene an der jeweiligen Schienengeometrie anzuordnen. Dies insbesondere bei konvex gekrümmter Lauffläche 10 im Bereich von der jeweils vorgesehenen Messbahn oder dem Messstreifen des jeweiligen Sensors 24 an der Schiene 2.

Bei dem in der Fig. 3 rechts dargestellten Sensor 24 ist ca. im Mittel der Breite von dessen Messabschnitt die dafür relevante weitere Schienenebene 13 als Tangentialebene angedeutet. Die Führung und Verstellung dieses Sensors 24 kann in einer Normalrichtung auf die weitere Schienenebene 13 erfolgen. Dazu kann eine Neigungsverstellung des jeweiligen Sensors 24 in Querrichtung bezüglich der Schienen-Längserstreckung vorgesehen sein. Es wäre aber auch eine geneigte Ausrichtung und Anordnung des Messwagens 16 und eine parallele Ausrichtung von dessen Laufradachsen bezüglich der jeweiligen Schienenebene 13 denkbar und möglich.

Die Führungsanordnung 23 ist ihrerseits am Wagenrahmen 17 angeordnet oder daran befestigt und dient dazu oder ist dazu ausgebildet, den Mess-Basisträger 22 relativ bezüglich des Wagenrahmens 17 verlagerbar zu führen. Bei der Führungsanordnung 23 handelt es sich bevorzugt jeweils um eine als Linearführung ausgebildete Führungsvorrichtung, um eine geradlinige Längsführung ausbilden zu können. Die zusammenwirkenden Führungselemente der jeweiligen Führungsvorrichtung der Führungsanordnung 23 können z.B. in Wagenlängsrichtung voneinander beabstandet angeordnet sein und so eine hohe Führungsqualität ausbilden. Dies insbesondere leichtgängig und verkantungsfrei.

Der Mess-Basisträger 22 ist mittels der Führungsanordnung 23 in normaler Ausrichtung bezüglich der jeweiligen von den beiden Schienen 2 jeweils definierten Schienenebene 13 relativ bezüglich des Wagenrahmens 17 verlagerbar geführt. Damit kann eine parallele Führung des Mess-Basisträgers 22 bezüglich einer Schienen-Hochachse bzw. des Schienenstegs 6 erzielt werden. Die Bezugsebene für die Verstellbewegung des Mess-Basisträgers 22 kann aber auch vom Wagenrahmen 17 selbst oder den einzelnen Laufrädern 18 im Bereich von deren Dreh- oder Lagerachse oder aber auch von deren bodenseitigen Umfangsflächen definiert sein oder werden.

Weiters wäre es noch möglich, den zumindest einen ersten Sensor 24 schwenkbar oder kippbar am Mess-Basisträger 22 anzuordnen. Es könnte aber auch eine Verstellmöglichkeit des Sensors 24 in Querrichtung bezüglich der Schienen-Längserstreckung geschaffen oder vorgesehen werden. Damit kann oder können die unterschiedlichsten Lagen und/oder Ausrichtungen des jeweiligen Sensors 24 auf die zu messende Schiene 2 eingestellt werden. Dies kann z.B. bei gegeneinander verkippt angeordneten Schienen 2 erforderlich sein.

Die Laufräder 18 des Messwagens 16 können z.B. von Kugellagern gebildet sein, um eine exakte Lagerung mit geringem Platzbedarf realisieren zu können. Um eine direkte harte Abstützung (Eisen auf Eisen) der Laufräder 18 auf den Schienen 2 zu vermeiden, können die die Laufräder 18 bildenden Kugellager an ihren umlaufenden äußeren Oberflächen jeweils mit einer zusätzliche Dämpfungsschicht 25 versehen sein. Die Dämpfungsschicht 25 kann aus einem elastomeren Werkstoff gebildet sein. Derartige Werkstoffe weisen einen eher geringen oder sehr geringen Elastizitätsmodul (E-Modul) auf. Der Elastizitätsmodul kann aus einem Wertebereich stammen, dessen untere Grenze 5 N/mm², insbesondere 10 N/mm², und dessen obere Grenze 100 N/mm², insbesondere 80 N/mm², beträgt.

Als Werkstoff kann z.B. Gummielastomere, Elastomere oder Silikonwerkstoffe eingesetzt werden. Durch das Vorsehen der Dämpfungsschicht 25 kann so eine störungsfreie Vermessung der Schiene 2 durchgeführt werden, ohne dass Vibrationen und/oder Schwingungen ausgehend von der Schienen-Bearbeitungsmaschine während des Bearbeitungsvorgangs oder der Bearbeitungsvorgänge auf die Messeinheit 14 übertragen werden. Damit kann eine ausreichend gute Dämpfungswirkung durch die Entkopplung des Messwagens 16 von den Schienen 2 erzielt werden.

Eine weitere Trennung oder Entkopplung erfolgt durch das Vorsehen der eigenen Messanlage 19 mit deren Messwagen 16 und der darauf befindlichen Messeinheit 14. Der Messwagen 16 kann so mit einer ausreichend hohen Eigenmasse ausgebildet werden. Die zuvor beschriebene Kopplungsvorrichtung 20 dient zur Übertagung und Mitbewegung der Messanlage 19 mit der Bearbeitungsmaschine oder einem anderen Schienenfahrzeug und kann ihrerseits derart ausgebildet werden, dass eine Übertragung von Schwingungen bzw. Vibrationen ausgehend von der Schienen-Bearbeitungsmaschine weitestgehend unterbunden werden können.

Weiters umfasst die Messeinheit 14 auch noch eine Abstützvorrichtung 26, mittels welcher der Mess-Basisträger 22 mitsamt dem zumindest einen ersten Sensor 24 mechanisch auf zumindest einer der Schienen 2 abstützbar ist oder daran abgestützt ist. Mittels der Abstützvorrichtung 26 kann der zumindest eine erste Sensor 24 während der Verlagerung des Messwagens 16 in Schienenlängsrichtung stets in einem vorbestimmten, fixen Abstand oberhalb der Schiene 2 entlanggeführt werden. Dies erfolgt im Zuge der Messfahrt. Die Abstützvorrichtung 26 ist mit dem Mess-Basisträger 22 verbunden oder daran angeordnet und umfasst zumindest ein Rad, welches auch als Abstützrad 31 bezeichnet werden kann. Das zumindest eine Abstützrad 31 kann z.B. von einem Kugellager gebildet sein. Das Kugellager kann an seiner umlaufenden äußeren Oberfläche ebenfalls mit der zuvor bereits beschriebenen Dämpfungsschicht 25, insbesondere aus dem elastomeren Werkstoff, versehen oder belegt sein. Das Rad bzw. das Abstützrad 31 könnte aber auch in seinem überwiegenden Anteil aus einem elastomeren Werkstoff mit ausreichender Formbeständigkeit und/oder Festigkeit gebildet sein. Je geringer oder kleiner der Durchmesser des Rades bzw. Abstützrades 31 ist, desto genauer kann damit der erste Sensor 24 entlang der Welligkeit der Schiene 2 entlang geführt werden.

Ist keine Messfahrt durchzuführen, kann der Mess-Basisträger 22 mitsamt der Abstützvorrichtung 26 von der Schiene 2 abgehoben werden, wobei dies entlang der Führungsanordnung 23 erfolgen kann. Auf die Darstellung von Stellmittel und/oder Arretiermittel wurde der besseren Übersichtlichkeit halber verzichtet.

Um auch die Welligkeit der Schienenoberfläche, insbesondere der Lauffläche 10, von zumindest einer der Schienen 2 in Richtung von deren Längserstreckung ermitteln zu können, kann die erste Messanordnung 21 auch noch zumindest einen zweiten Sensor 27 umfassen. Der zumindest eine zweite Sensor 27 ist dazu ausgebildet oder dazu vorgesehen, die Relativverlagerung des zumindest einen ersten Sensors 24 bezüglich des Wagenrahmens 17 des Messwagens 16 während der Verlagerung des Messwagens 16 entlang der Schienen 2 zu ermitteln. Die Messung oder Ermittlung der Relativverlagerung kann oder soll bevorzugt auch kontaktlos erfolgen, wobei der zweite Sensor 27 z.B. von einem Abstandssensor gebildet sein kann. Es wurde der sich während der Messfahrt ständig ermittelte Abstand zwischen dem zweiten Sensor 27 und dem ersten Sensor 24 mit dem Buchstaben "a" eingetragen.

Es wäre aber auch möglich, unabhängig davon oder zusätzlich dazu, die Relativverlagerung indirekt zwischen dem Mess-Basisträger 22 und dem Wagenrahmen 17 während der Verlagerung des Messwagens 16 entlang der Schienen 2 zu ermitteln. Weiters könnte aber auch die Relativverlagerung zwischen den zusammenwirkenden Führungselementen der Führungsanordnung 23 ermittelt werden. In jedem Fall entspricht dies auch der Relativverlagerung des zumindest einen ersten Sensors 24 bezüglich des Wagenrahmens 17 des Messwagens 16. Mit der zuvor beschriebenen ersten Messmethode wird der jeweilige Relativabstand direkt ermittelt, wobei bei den zweiten Messmethoden dies indirekt über den Mess-Basisträger 22 mit dem daran befestigten ersten Sensor 24 und/oder zwischen den Führungselementen erfolgt.

In manchen Betriebsfällen kann es erforderlich sein, wenn z.B. die Eigenmasse oder Eigenträgheit des gesamten Mess-Basisträgers 22 mitsamt den daran befindlichen weiteren Komponenten, wie z.B. der Führungsanordnung 23, der Abstützvorrichtung 26, zu gering ist und dies je nach Welligkeit und/oder Fortbewegungsgeschwindigkeit des Messwagens 16 zu zusätzlichen Relativverlagerungen des Mess-Basisträgers 22 bezüglich des Wagenrahmens 17 führt, zumindest ein Stell- und/oder Dämpfungsorgan 32 vorzusehen. In der Fig. 2 ist ein Stell- und/oder Dämpfungsorgan 32 angedeutet, welches zwischen dem Wagenrahmen 17 und einem Führungselement der Führungsanordnung 23 wirkend dargestellt ist. Das Stell- und/oder Dämpfungsorgan 32 kann unter anderem dazu ausgebildet oder vorgesehen, eine Druckkraft unter Abstützung am Wagenrahmen 17 auf die Abstützvorrichtung 26 und damit in weiterer Folge ein Anrücken auf die Schiene 2 zu bewirken. So können zusätzliche ungewollte Schwingungen minimiert oder verhindert werden und damit ein Verfälschen der Messungen weitgehendst oder gänzlich verhindert werden.

Das Stell- und/oder Dämpfungsorgan 32 kann aber auch noch dazu dienen oder ausgebildet sein, den Mess-Basisträger 22 mitsamt der Abstützvorrichtung 26 und dem ersten Sensor 24 von der Schiene 2 abzuheben. Für diese Verstellbewegung könnte aber auch ein zusätzliches weiteres Stell- und/oder Dämpfungsorgan 32 vorgesehen werden. Die relative Verstellbewegung erfolgt mittels der Führungselemente der Führungsanordnung 23. Das Stell- und/oder Dämpfungsorgan 32 kann z.B. durch eine Feder, eine Zylinder-Kolbenanordnung, eine Magnetanordnung oder dergleichen gebildet sein.

Um einen Bezug der ermittelten Welligkeit zu deren Längsposition an der Schiene 2 zu erhalten, kann die Messeinheit 14 weiters eine Wegmessvorrichtung 28 umfassen. Die Wegmessvorrichtung 28 ist dazu ausgebildet, die vom Messwagen 16 zurückgelegte Wegstrecke während der Verlagerung des Messwagens 16 entlang der Schienen 2 zu ermitteln.

Als mögliches Ausführungsbeispiel der Wegmessvorrichtung 28 sei ein eigenes Wegmessrad angeführt. Es wäre aber auch noch möglich, die Wegmessvorrichtung 28 von einem der Laufräder 18 zu bilden oder bei einem der Laufräder 18 vorzusehen. Weiters wäre aber auch noch möglich, die Wegmessvorrichtung 28 bei der Abstützvorrichtung 26 des Mess-Basisträgers 22 vorzusehen oder anzuordnen, wenn diese von zumindest einem Abstützrad 31 gebildet ist.

Bevorzugt wird die erste Messanordnung 21 mit dem zumindest einen ersten Sensor 24 sowie gegebenenfalls auch dem zweiten Sensor 27 und auch der Wegmessvorrichtung 28 einer der Schienen 2 zugeordnet. Um auch an der gegenüberliegend befindlichen weiteren Schiene 2 die zuvor beschriebenen Messwerte ermitteln zu können, kann die Messeinheit 14 weiters eine zweite Messanordnung 29 umfassen.

Eine stark vereinfachte Darstellung zeigt in der Fig. 4 die mögliche nebeneinander Anordnung von jeweils einer der Messanordnungen 21, 29 an jeweils einer der Schienen 2. Ein die gesamte Messeinheit 14 mitführende Zugmaschine 33, welche z.B. von einer Schienen-Bearbeitungsmaschine gebildet sein kann, ist lediglich in Rechteckform angedeutet, wobei auf die Darstellung von deren Abstützung auf den Schienen 2 der besseren Übersichtlichkeit halber verzichtet worden ist.

Von jeder der Schienen 2 wird jeweils die Schienenebene 13 definiert, wobei jede der Schienenebenen 13 im Querschnitt gesehen eine normale Ausrichtung bezüglich des jeweiligen Schienenstegs 6 aufweist. Die Schrägstellung oder Schräglage kommt durch die verkippte Anordnung der Schienen 2 zustande, wobei in diesem Fall die beiden Schienenebenen 13 in Richtung auf die Gleismitte gesehen abfallend und zusammenlaufend ausgerichtet sind.

Um eine Querverbindung zwischen den beiden Messanordnungen 21, 29 realisieren zu können, ist dazu vereinfacht ein Querverbindungsorgan 34 angedeutet. Das Querverbindungsorgan 34 verbindet die beiden Messanordnungen 21, 29 und kann auch zum Ausgleich oder die Anpassung an unterschiedliche Spurweiten dienen. Weiters kann das Querverbindungsorgan 34 auch noch ein Dämpfungselement 35 umfassen, um auch eine Übertragung von Schwingungen zwischen den beiden Messanordnungen 21, 29 so gering wie möglich zu halten.

Zwischen jeder der Messanordnungen 21, 29 und der Zugmaschine 33 kann jeweils die Kopplungsvorrichtung 20 vorgesehen sein, um ein Mitbewegen erzielen zu können.

Die zweite Messanordnung 29 kann bevorzugt gleichartig ausgebildet oder gleichartig aufgebaut sein, wie die erste Messanordnung 21 und die gleichen oder dieselben Bauteilkomponenten umfassen. Aus Gründen der besseren Übersichtlichkeit halber in der Fig. 2, ist die zweite Messanordnung 29 nicht gesondert dargestellt, jedoch das Bezugszeichen 29 neben dem Bezugszeichen 21 für die erste Messanordnung 21 eingetragen. Dies deshalb, da sich die zweite Messanordnung 29 bei der in der Fig. 2 gewählten Seitenansicht hinterhalb und somit neben der ersten Messanordnung 21 befindet. Die zweite Messanordnung 29 stellt somit eine eigenständige Anordnung zum Ermitteln oder Messen der Oberflächenbeschaffenheit dar. Bevorzugt wird jeder der beiden Schienen 2 jeweils zumindest eine der Messanordnungen 21, 29 zugeordnet und bilden gemeinsam die Messeinheit 14. Es wäre aber auch noch möglich, die zumindest zwei Messanordnungen 21, 29 hintereinander anzuordnen und nur an einer der Schienen 2 den Messvorgang durchzuführen.

Die beiden jeweils auf einer der Schienen 2 abgestützten Messanordnungen 21, 29 können miteinander gekuppelt werden, wobei auch ein zusätzlicher Spurweitenausgleich denkbar ist. Es ist auch eine gegenseitige Neigungsverstellung zueinander möglich. Dies ist mit dem eingetragenen und um den Winkel Alpha reduzierten rechten Winkel von 90° dargestellt.

Weiters ist in der Fig. 2 noch dargestellt, dass am Wagenrahmen 17 zumindest ein weiterer Sensor 37 vorgesehen kann, bevorzugt jedoch mehrere weitere Sensoren 37 vorgesehen sein können. Der weitere Sensor 37 ist dazu ausgebildet oder vorgesehen, dass dieser die relative räumliche Lage und Stellung des Wagenrahmens 17, die Führung der gesamten Messanlage 19 in Bezug auf Unebenheiten und/oder der Abstützvorrichtung 26, insbesondere deren Abstützrad ermitteln kann.

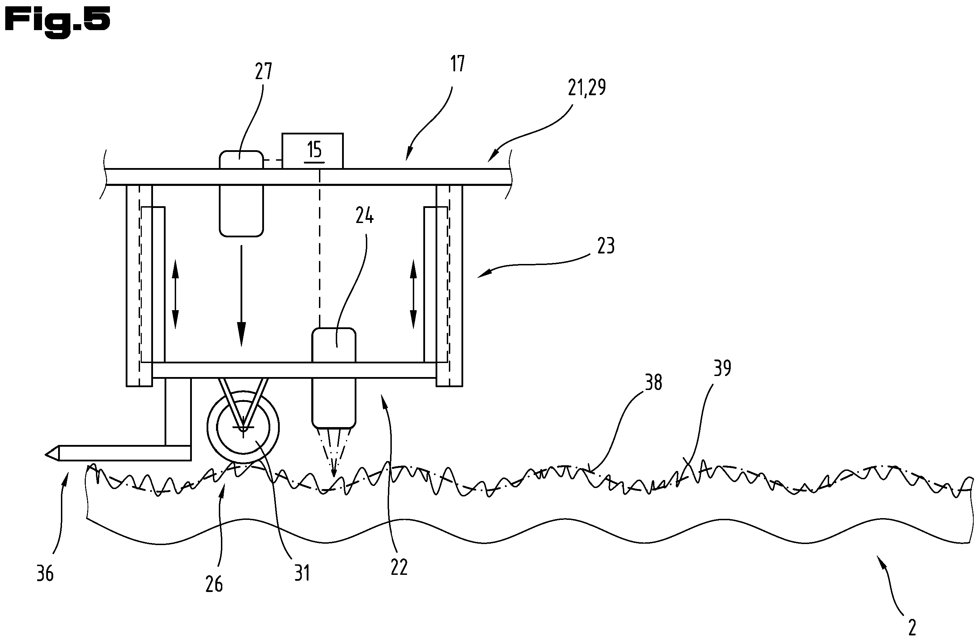

In der Fig. 5 ist eine mögliche weitere und gegebenenfalls für sich eigenständige Ausführungsform des am Wagenrahmen 17 verstellbar geführten Mess-Basisträgers 22 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Die Darstellungsart ist stilisiert gewählt, wobei die Abstützvorrichtung 26 mit dem hier dargestellten Abstützrad am Mess-Basisträger 22 zusätzlich auch noch eine Stützkufe 36 umfassen kann. Die Stützkufe 36 bildet eine weitere Komponente der Abstützvorrichtung 26 aus und kann eine mechanische Notfallsicherung ausbilden. Durch das Entlangführen der Stützkufe 36 an der Schiene 2 kann eine Kollision des Sensors 24 mit der Oberfläche der Schiene 2 verhindert werden. Dies kann dann der Fall sein, wenn die Abstützvorrichtung 26 insbesondere als Abstützrad ausgebildet ist, und über einen Schienenstoß hinwegrollt und dabei in den Spalt des Schienenstoßes teilweise hinein verstellt wird. Damit kann in gewissen Grenzen eine zu weite Annäherung des Sensors 24 an die Schiene 2 und damit eine weitere relative Verstellung in Richtung auf die Schiene 2 verhindert werden.

Der zweite Sensor 27 ermittelt die relative Verlagerung des Mess-Basisträgers 22 bezüglich des Wagenrahmens 17.

Weiters ist unterhalb des Mess-Basisträgers 22 nur das zu erfassende und festzustellende Längsprofil der Schiene 2 stark übertrieben als Teilausschnitt der Schiene 2 dargestellt. Dabei ist in einer ersten Diagrammlinie 38 die Welligkeit der Schiene 2, nämlich die Höhenabweichung von einer Geraden in Bezug auf die ermittelte oder gemessene Wegstrecke, dargestellt. Die Oberflächenrauigkeit entlang der Schienenoberfläche in Längserstreckung derselben mit deren Welligkeit gemäß der ersten Diagrammlinie 38 ist ebenfalls stark übertrieben in einer zweiten Diagrammlinie 39 dargestellt. Die zweite Diagrammlinie 39 beschreibt oder zeigt die Superposition der Welligkeit und der Oberflächenrauigkeit.

Bei der Messfahrt bzw. der relativen Verfahrbewegung der Messanlage 19 mit dem Messwagen 16, den Sensoren 24, 27 und der Wegmessvorrichtung 28, welche ebenfalls einen Sensor oder Messwertgeber umfasst, relativ bezüglich der Schienen 2 werden mehrere unterschiedliche Signale und damit verbunden unterschiedliche Messwerte erfasst und/oder ermittelt. Vom ersten Sensor 24 wird die Oberflächenrauigkeit ermittelt, wobei diese in zeitabhängigen Signalen an die Auswertevorrichtung 15 übermittelt wird. Von der Wegmessvorrichtung 28 wird die zurückgelegte Wegstrecke ermittelt und dabei zeitabhängige Wegsignale für die Messtrecke ebenfalls an die Auswertevorrichtung 15 übermittelt. Schließlich wird zur Ermittlung der Welligkeit der Schienenoberfläche in deren Längserstreckung vom zweiten Sensor 27 die Relativverlagerung des ersten Sensors 24 oder des Mess-Basisträgers 22 bezüglich des Wagenrahmens 17 laufend ermittelt und dazu zeitabhängige Welligkeitssignale an die Auswertevorrichtung 15 übermittelt. Aus den einzelnen zeitabhängigen Signalen wird durch Kombination ein wegabhängiges Signal generiert, welches in einem Diagramm als reales Längsprofil an der Schiene 2 sowohl mit deren Welligkeit als auch Oberflächenrauigkeit dargestellt werden kann.

Wird eine Messfahrt durchgeführt, werden die von der Messeinheit 14 ermittelten unterschiedlichsten Messwerte an die Auswertevorrichtung 15 übertragen oder weitergeleitet. Dies bevorzug getrennt je nach der jeweiligen Schiene 2. Die jeweiligen Messwerte können die Oberflächenrauigkeit, die Relativbewegung zwischen dem zumindest einen ersten Sensor 24 oder dem den Sensor 24 tragenden Mess-Basisträger 22 und dem Wagenrahmen 17, die zurückgelegte Wegstrecke entlang der Schienen 2 sowie gegebenenfalls jene Messwerte des weiteren Sensors 37 betreffen. Mit dem jeweiligen Messwert der relativen Stellung des ersten Sensors 24 bezüglich des Wagenrahmens 17 und der zurückgelegte Wegstrecke entlang der Schienen 2 kann die Welligkeit der jeweiligen Schiene 2 entlang ihrer Längserstreckung und die exakte Längsposition ermittelt werden. Die jeweiligen Kommunikationsverbindungen zur Übertragung der ermittelten oder gemessenen Messwerte wurden mit strichlierten Linien angedeutet. Die Kommunikationsverbindungen können drahtlos und/oder leitungsgebunden erfolgen. Damit kann unter anderem ein durchgängiges Rauigkeitsprofil entlang der Schienen 2 mit dem zumindest einen ersten Sensor 24 erstellt und dokumentiert werden. Die Welligkeit wird, wie zuvor beschrieben, im Zusammenwirken der Wegmessvorrichtung 28 mit der Ermittlung der Relativverstellung des ersten Sensors 24 bezüglich des Wagenrahmens 17 bestimmt.

Ist dies erfolgt, kann von den einzelnen Messwerten ein Auswerte- oder Messprotokoll generiert und gegebenenfalls auch ausgeben werden. Wie bereits zuvor erwähnt, soll bevorzugt die Messfahrt und damit das Ermitteln der Oberflächenbeschaffenheit unmittelbar und nachfolgend an den Bearbeitungsvorgang an der zumindest einen Schiene 2 durchgeführt werden.

Damit kann der exakte Ist-Zustand unmittelbar nach der durchgeführten Nachbearbeitung erhoben und ggf. auch dokumentiert werden. Weiters wird damit die Möglichkeit geschaffen, bei einem unbefriedigenden oder von der Norm abweichenden Bearbeitungsergebnis den Bearbeitungsvorgang, insbesondere den Reprofilierungsvorgang, zu unterbrechen und den nicht den Erfordernissen entsprechenden Schienenabschnitt gleich einem weiteren Bearbeitungsvorgang neuerlich zu unterziehen.

Zur Durchführung des Verfahrens zum Ermitteln der Oberflächenbeschaffenheit an zumindest einem Schienenkopf 5 entlang des verlegten und von den Schienen 2 gebildeten Schienenstrangs 1 sind zumindest folgende Schritte durchzuführen:
- Bereitstellen des Messwagens 16 mit seinem Wagenrahmen 17 und den am Wagenrahmen 17 drehbar gelagerten Laufrädern 18, wobei der Wagenrahmen 17 mittels der Laufräder 18 auf den Schienen 2 abgestützt wird und entlang der Schienen 2 verlagerbar oder verfahrbar ist,
- Bereitstellen der Messeinheit 14 mit der zumindest einen ersten Messanordnung 21 mit dem Mess-Basisträger 22, der Führungsanordnung 23 und zumindest einem ersten Sensor 24, welcher zumindest eine erste Sensor 24 am Mess-Basisträger 22 angeordnet wird und die Führungsanordnung 23 ihrerseits am Wagenrahmen 17 angeordnet ist, wobei weiters der Mess-Basisträger 22 mittels der Führungsanordnung 23 bevorzugt in normaler Ausrichtung bezüglich der jeweiligen Schienenebene 13 relativ bezüglich des Wagenrahmens 17 verlagerbar geführt wird,
- Bereitstellen der Abstützvorrichtung 26 und mechanisches Abstützen des Mess-Basisträgers 22 mitsamt dem zumindest einen ersten Sensor 24 mittels der Abstützvorrichtung 26 während der Verlagerung des Messwagens 16 entlang der Schienen 2,
- Verlagern des Messwagens 16 entlang der Schienen 2 und dabei ermitteln der Oberflächenbeschaffenheit an zumindest einem Schienenkopf 5 von zumindest einer Schiene 2, und weiters dabei
- der zumindest eine erste Sensor 24 während der Verlagerung des Messwagens 16 mittels der Abstützvorrichtung 26 stets in einem vorbestimmten, fixen Abstand oberhalb der Schiene 2 entlanggeführt wird. Der vorbestimmte fixe Abstand des ersten Sensors 24 bezieht sich auf die jeweilige und aktuelle Abstützposition oder dem Anlagebereich der Abstützvorrichtung 26 auf der Schiene 2.

Der Messwagen 16, welcher mittels der Laufräder 18 auf den Schienen 2 fahrend abgestützt ist, kann zusätzlich auch noch mittels mehrerer Seitenführungsrollen 30 in paralleler Ausrichtung bezüglich der Schienen-Längserstreckung entlang geführt werden. Die Seitenführungsrollen 30 können den ansonst üblichen Spurkranz für die Führung in Querrichtung bezüglich der Gleisachse 3 ersetzen und z.B. an der inneren Seitenfläche 8 von jeder der Schienen 2 zur Anlage kommen. Es ist auch eine nebeneinander Anordnung der Seitenführungsrollen 30 denkbar. Bedarfsweise können die Seitenführungsrollen 30 auch noch relativ bezüglich des Wagenrahmens 17 verstellbar an diesem angeordnet und gehalten sein. Dies deshalb, um z.B. bei Weichen oder Kreuzungen Kollisionen verhindern zu können. Die relative Verstellung kann z.B. durch einen Schwenkvorgang, eine Höhenverstellung auf die von der Schiene 2 abgewendete Seite oder dergleichen erfolgen oder durchgeführt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Schienenstrang | 30 | Seitenführungsrolle |
| | | 31 | Abstützrad |
| 2 | Schiene | 32 | Stell- und/oder Dämpfungsorgan |
| 3 | Gleisachse | 33 | Zugmaschine |
| 4 | Schwelle | 34 | Querverbindungsorgan |
| 5 | Schienenkopf | 35 | Dämpfungselement |
| 6 | Schienensteg | 36 | Stützkufe |
| 7 | Schienenfuß | 37 | weiterer Sensor |
| 8 | innere Seitenfläche | 38 | erste Diagrammlinie |
| 9 | äußere Seitenfläche | 39 | zweite Diagrammlinie |
| 10 | Lauffläche | 40 | erster Achsabstand |
| 11 | Fahrfläche | 41 | zweiter Achsabstand |
| 12 | Fahrkante | | |
| 13 | Schienenebene | | |
| 14 | Messeinheit | | |
| 15 | Auswertevorrichtung | | |
| 16 | Messwagen | | |
| 17 | Wagenrahmen | | |
| 18 | Laufrad | | |
| 19 | Messanlage | | |
| 20 | Kopplungsvorrichtung | | |
| 21 | erste Messanordnung | | |
| 22 | Mess-Basisträger | | |
| 23 | Führungsanordnung | | |
| 24 | erster Sensor | | |
| 25 | Dämpfungsschicht | | |
| 26 | Abstützvorrichtung | | |
| 27 | zweiter Sensor | | |
| 28 | Wegmessvorrichtung | | |
| 29 | zweite Messanordnung | | |

## Patentansprüche

1. Verfahren zum Ermitteln der Oberflächenbeschaffenheit an zumindest einem Schienenkopf (5), insbesondere an dessen Lauffläche (10), entlang eines verlegten und von Schienen (2) gebildeten Schienenstrangs (1), wobei von den beiden Schienen (2) jeweils zumindest eine Schienenebene (13) definiert wird, und bei dem folgende Schritte durchgeführt werden
- Bereitstellen eines Messwagens (16) mit einem Wagenrahmen (17) und am Wagenrahmen (17) drehbar gelagerten Laufrädern (18), wobei der Wagenrahmen (17) mittels der Laufräder (18) auf zumindest einer der Schienen (2) abgestützt wird und entlang der Schienen (2) verlagerbar ist,
- Bereitstellen einer Messeinheit (14) mit zumindest einer ersten Messanordnung (21) mit einem Mess-Basisträger (22), einer Führungsanordnung (23) und zumindest einem ersten Sensor (24), welcher zumindest eine erste Sensor (24) am Mess-Basisträger (22) angeordnet wird und die Führungsanordnung (23) ihrerseits am Wagenrahmen (17) angeordnet ist, wobei weiters der Mess-Basisträger (22) mittels der Führungsanordnung (23) bevorzugt in normaler Ausrichtung bezüglich der jeweiligen Schienenebene (13) relativ bezüglich des Wagenrahmens (17) verlagerbar geführt wird, und
- Verlagern des Messwagens (16) entlang der Schienen (2) und dabei ermitteln der Oberflächenbeschaffenheit an zumindest einem Schienenkopf (5) von zumindest einer Schiene (2),
wobei der Mess-Basisträger (22) mitsamt dem zumindest einen ersten Sensor (24) während der Verlagerung des Messwagens (16) entlang der Schienen (2) mittels einer Abstützvorrichtung (26) mechanisch auf der zumindest einen Schiene (2) abgestützt wird, und
der zumindest eine erste Sensor (24) während der Verlagerung des Messwagens (16) mittels der Abstützvorrichtung (26) und bezüglich der jeweiligen Abstützposition der Abstützvorrichtung (26) auf der Schiene (2) stets in einem vorbestimmten, fixen Abstand oberhalb der Schiene (2) entlanggeführt wird, **dadurch gekennzeichnet,**
**dass** die Laufräder (18) in Richtung der Fortbewegungsrichtung des Messwagens (16)jeweils paarweise hintereinander am Messwagen (16) angeordnet werden und von diesen jeweils ein erstes Laufradpaar und zumindest ein zweites Laufradpaar gebildet wird, wobei das erste Laufradpaar in der Fortbewegungsrichtung des Messwagens (16) in einem ersten Achsabstand (40) voneinander angeordnet wird und das zweite Laufradpaar in der gleichen Richtung in einem zweiten Achsabstand (41) voneinander angeordnet wird, wobei der erste Achsabstand (40) und der zweite Achsabstand (41) zueinander um zumindest 20% unterschiedlich gewählt werden und von einem Verhältnis der beiden Achsabstände (40, 41) zueinander keine natürliche Zahl gebildet wird.

2. Verfahren nach Anspruch 1, **dadurch gekennzeichnet, dass** die Abstützvorrichtung (26) des Mess-Basisträgers (22) von zumindest einem Abstützrad (31) gebildet wird.

3. Verfahren nach Anspruch 2, **dadurch gekennzeichnet, dass** das zumindest eine Abstützrad (31) von einem Kugellager gebildet wird und das Kugellager an seiner umlaufenden äußeren Oberfläche mit einer Dämpfungsschicht (25), insbesondere aus einem elastomeren Werkstoff, versehen ist.

4. Verfahren nach einem der vorhergehenden Ansprüche, **dadurch gekennzeichnet, dass** die Laufräder (18) des Messwagens (16) von Kugellagern gebildet werden und die Kugellager an ihren umlaufenden äußeren Oberflächen jeweils mit einer Dämpfungsschicht (25), insbesondere aus einem elastomeren Werkstoff, versehen sind.

5. Verfahren nach einem der vorhergehenden Ansprüche, **dadurch gekennzeichnet, dass** vom zumindest einen ersten Sensor (24) die Oberflächenrauigkeit an einer der Schienen (2) ermittelt wird.

6. Verfahren nach einem der vorhergehenden Ansprüche, **dadurch gekennzeichnet, dass** die erste Messanordnung (21) mit zumindest einem zweiten Sensor (27) ausgestattet wird und während der Verlagerung des Messwagens (16) entlang der Schienen (2) vom zumindest einen zweiten Sensor (27) die Relativverlagerung des zumindest einen ersten Sensors (24) bezüglich des Wagenrahmens (17) des Messwagens (16) ermittelt wird.

7. Verfahren nach einem der vorhergehenden Ansprüche, **dadurch gekennzeichnet, dass** während der Verlagerung des Messwagens (16) entlang der Schienen (2) die vom Messwagen (16) zurückgelegte Wegstrecke mittels einer Wegmessvorrichtung (28) der Messeinheit (14) ermittelt wird.

8. Verfahren nach Anspruch 7, **dadurch gekennzeichnet, dass** die Wegmessvorrichtung (28) von einem eigenen Wegmessrad und/oder von einem der Laufräder (18) und/oder von dem zumindest einen die Abstützvorrichtung (26) bildenden Abstützrad (31) gebildet oder definiert wird.

9. Verfahren nach einem der vorhergehenden Ansprüche, **dadurch gekennzeichnet, dass** die Messeinheit (14) weiters mit zumindest einer zweiten Messanordnung (29) ausgestattet wird und die zweite Messanordnung (29) gleichartig wie die erste Messanordnung (21) ausgebildet wird und von den beiden Messanordnungen (21, 29) jeweils die Oberflächenbeschaffenheit von zumindest einer der beiden Schienen (2) ermittelt wird.

10. Verfahren nach einem der vorhergehenden Ansprüche, **dadurch gekennzeichnet, dass** die von der Messeinheit (14) ermittelten Messwerte an eine Auswertevorrichtung (15) übertragen oder weitergeleitet werden und von den Messwerten ein Auswerte- oder Messprotokoll generiert wird.

11. Verfahren nach einem der vorhergehenden Ansprüche, **dadurch gekennzeichnet, dass** das Ermitteln der Oberflächenbeschaffenheit unmittelbar nachfolgend an einen Bearbeitungsvorgang an der zumindest einen Schiene (2) durchgeführt wird.

12. Messanlage (19) zum Ermitteln der Oberflächenbeschaffenheit an zumindest einem Schienenkopf (5), insbesondere an dessen Lauffläche (10), entlang eines verlegten und von Schienen (2) gebildeten Schienenstrangs (1), wobei von den beiden Schienen (2) jeweils zumindest eine Schienenebene (13) definiert wird, die Messanlage (19) umfasst
- einen Messwagen (16) mit einem Wagenrahmen (17) und am Wagenrahmen (17) drehbar gelagerten Laufrädern (18), wobei der Wagenrahmen (17) mittels der Laufräder (18) auf zumindest einer der Schienen (2) abstützbar und entlang der Schienen (2) verlagerbar ist,
- eine Messeinheit (14) mit zumindest einer ersten Messanordnung (21) mit einem Mess-Basisträger (22), einer Führungsanordnung (23) und zumindest einem ersten Sensor (24), welcher zumindest eine erste Sensor (24) am Mess-Basisträger (22) angeordnet ist und die Führungsanordnung (23) ihrerseits am Wagenrahmen (17) angeordnet ist, wobei weiters der Mess-Basisträger (22) mittels der Führungsanordnung (23) bevorzugt in normaler Ausrichtung bezüglich der jeweiligen Schienenebene (13) relativ bezüglich des Wagenrahmens (17) verlagerbar geführt ist, insbesondere zur Durchführung des Verfahrens zum Ermitteln der Oberflächenbeschaffenheit nach einem der vorhergehenden Ansprüche,
wobei der Mess-Basisträger (22) mitsamt dem zumindest einen ersten Sensor (24) zum Ermitteln der Oberflächenbeschaffenheit mittels einer Abstützvorrichtung (26) mechanisch auf der zumindest einen Schiene (2) abstützbar ist, und
der zumindest eine erste Sensor (24) während der Verlagerung des Messwagens (16) mittels der Abstützvorrichtung (26) und bezüglich der jeweiligen Abstützposition der Abstützvorrichtung (26) auf der Schiene (2) stets in einem vorbestimmten, fixen Abstand oberhalb der Schiene (2) entlangführbar ist, **dadurch gekennzeichnet,**
**dass** die Laufräder (18) in Richtung der Fortbewegungsrichtung des Messwagens (16) jeweils paarweise hintereinander am Messwagen (16) angeordnet sind und von diesen jeweils ein erstes Laufradpaar und zumindest ein zweites Laufradpaar gebildet ist, wobei das erste Laufradpaar in der Fortbewegungsrichtung des Messwagens (16) in einem ersten Achsabstand (40) voneinander angeordnet ist und das zweite Laufradpaar in der gleichen Richtung in einem zweiten Achsabstand (41) voneinander angeordnet ist, wobei der erste Achsabstand (40) und der zweite Achsabstand (41) zueinander um zumindest 20% unterschiedlich gewählt werden und das Verhältnis der beiden Achsabstände (40, 41) zueinander keine natürliche Zahl bildet.

13. Messanlage (19) nach Anspruch 12, **dadurch gekennzeichnet, dass** die Abstützvorrichtung (26) für den Mess-Basisträger (22) zumindest ein Abstützrad (31) umfasst.

14. Messanlage (19) nach Anspruch 13, **dadurch gekennzeichnet, dass** das zumindest eine Abstützrad (31) von einem Kugellager gebildet ist und das Kugellager an seiner umlaufenden äußeren Oberfläche mit einer Dämpfungsschicht (25), insbesondere aus einem elastomeren Werkstoff, versehen ist.

15. Messanlage (19) nach einem der Ansprüche 12 bis 14, **dadurch gekennzeichnet, dass** die Laufräder (18) des Messwagens (16) von Kugellagern gebildet sind und die Kugellager an ihren umlaufenden äußeren Oberflächen jeweils mit einer Dämpfungsschicht (25), insbesondere aus einem elastomeren Werkstoff, versehen sind.

16. Messanlage (19) nach einem der Ansprüche 12 bis 15, **dadurch gekennzeichnet, dass** der zumindest eine erste Sensor (24) zur Ermittlung der Oberflächenrauigkeit an einer der Schienen (2) ausgebildet ist.

17. Messanlage (19) nach einem der Ansprüche 12 bis 16, **dadurch gekennzeichnet, dass** die erste Messanordnung (21) zumindest einen zweiten Sensor (27) umfasst und der zumindest eine zweite Sensor (27) dazu ausgebildet ist, die Relativverlagerung des zumindest einen ersten Sensors (24) bezüglich des Wagenrahmens (17) des Messwagens (16) während der Verlagerung des Messwagens (16) entlang der Schienen (2) zu ermitteln.

18. Messanlage (19) nach einem der Ansprüche 12 bis 17, **dadurch gekennzeichnet, dass** die Messeinheit (14) weiters eine Wegmessvorrichtung (28) umfasst und die Wegmessvorrichtung (28) dazu ausgebildet ist, die vom Messwagen (16) zurückgelegte Wegstrecke während der Verlagerung des Messwagens (16) entlang der Schienen (2) zu ermitteln.

19. Messanlage (19) nach einem der Ansprüche 12 bis 18, **dadurch gekennzeichnet, dass** die Messeinheit (14) weiters zumindest eine zweite Messanordnung (29) umfasst und die zweite Messanordnung (29) gleichartig wie die erste Messanordnung (21) ausgebildet ist.

## Claims

1. A method for determining the surface condition on at least one rail head (5), in particular on its running surface (10), along a laid railway track (1) formed by rails (2), wherein at least one rail plane (13) is defined by the two rails (2), and wherein the following steps are performed:
- provision of a measuring carriage (16) with a carriage frame (17) and rotatably mounted wheels (18) on the carriage frame (17), wherein the carriage frame (17) is supported by means of the wheels (18) on at least one of the rails (2) and is displaceable along the rails (2),
- provision of a measuring unit (14) with at least a first measuring arrangement (21) with a measurement base carrier (22), a guide arrangement (23) and at least one first sensor (24), said at least one first sensor (24) being arranged on the measurement base carrier (22) and the guide arrangement (23) being arranged on the carriage frame (17), wherein furthermore the measurement base carrier (22) is preferably guided by means of the guide arrangement (23) in a displaceable way in a normal alignment with respect to the respective rail plane (13) relative to the carriage frame (17), and
- displacement of the measuring carriage (16) along the rails (2) and thereby determining the surface condition on at least one rail head (5) of at least one rail (2), wherein during the displacement of the measuring carriage (16), the measurement base carrier (22) including the at least one first sensor (24) is mechanically supported on the at least one rail (2) by means of a supporting device (26), and
during the displacement of the measuring carriage (16), the at least one first sensor (24) is constantly guided at a predetermined, fixed distance above the rail (2) by means of the supporting device (26) and with respect to the respective support position of the supporting device (26) on the rail (2), **characterized in that**
the wheels (18) are arranged in pairs one behind the other on the measuring carriage (16) in the direction of travel of the measuring carriage (16) and of these a first and at least a second pair of wheels is formed, wherein the first pair of wheels is arranged at a first axial spacing (40) from one another in the direction of travel of the measuring carriage (16) and the second pair of wheels is arranged in the same direction at a second axial spacing (41) from one another, wherein the first axial spacing (40) and the second axial spacing (41) are selected to be at least 20% different to each other, and a ratio of the two axial spacings (40, 41) to one another does not form a natural number.

2. The method according to Claim 1, **characterized in that** the supporting device (26) of the measurement base carrier (22) is formed by at least one support wheel (31).

3. The method according to Claim 2, **characterized in that** the at least one support wheel (31) is formed by a ball bearing and the ball bearing is provided with a damping layer (25) on its circumferential outer surface, in particular made of an elastomeric material.

4. The method according to one of the preceding Claims, **characterized in that** the wheels (18) of the measuring carriage (16) are formed by ball bearings and the ball bearings are provided with a damping layer (25) on their circumferential outer surface, in particular made of an elastomeric material.

5. The method according to one of the preceding Claims, **characterized in that** the surface roughness is determined on one of the rails (2) by the at least one first sensor (24).

6. The method according to one of the preceding Claims, **characterized in that** the first measuring arrangement (21) is equipped with at least one second sensor (27) and during the displacement of the measuring carriage (16) along the rails (2) the relative displacement of the at least one first sensor (24) with respect to the carriage frame (17) of the measuring carriage (16) is determined by the at least one second sensor (27).

7. The method according to one of the preceding Claims, **characterized in that** during the displacement of the measuring carriage (16) along the rails (2), the path covered by the measuring carriage (16) is determined by means of a path measuring device (28) of the measuring unit (14).

8. The method according to Claim 7, **characterized in that** the path measuring device (28) is formed or defined by its own path measuring wheel and/or by one of the wheels (18) and/or by the at least one support wheel (31) which forms the supporting device (26).

9. The method according to one of the preceding Claims, **characterized in that** the measuring unit (14) is further equipped with at least a second measuring arrangement (29) and the second measuring arrangement (29) is configured identically to the first measuring arrangement (21) and, in each case, the surface condition of at least one of the two rails (2) is determined by the two measuring arrangements (21, 29).

10. The method according to one of the preceding Claims, **characterized in that** the measurements determined by the measuring unit (14) are transmitted or forwarded to an evaluation device (15) and an evaluation or measurement report is generated from the measurements.

11. The method according to one of the preceding Claims, **characterized in that** the determination of the surface condition is performed immediately following a machining process on the at least one rail (2).

12. A measuring system (19) for determining the surface condition on at least one rail head (5), in particular on its running surface (10), along a laid railway track (1) formed by rails (2), wherein at least one rail plane (13) is defined by the two rails (2), the measuring system (19) comprising:
- a measuring carriage (16) with a carriage frame (17) and rotatably mounted wheels (18) on the carriage frame (17), wherein the carriage frame (17) is supportable by means of the wheels (18) on at least one of the rails (2) and is displaceable along the rails (2),
- a measuring unit (14) with at least a first measuring arrangement (21) with a measurement base carrier (22), a guide arrangement (23) and at least one first sensor (24), said at least one first sensor (24) being arranged on the measurement base carrier (22) and the guide arrangement (23) being arranged on the carriage frame (17), wherein furthermore the measurement base carrier (22) is preferably guided by means of the guide arrangement (23) in a displaceable way in a normal alignment with respect to the respective rail plane (13) relative to the carriage frame (17), in particular for performing the method for determining the surface condition according to one of the preceding Claims,
wherein the measurement base carrier (22) including the at least one first sensor (24) for determining the surface condition is mechanically supportable on the at least one rail (2) by means of a supporting device (26), and
during the displacement of the measuring carriage (16), the at least one first sensor (24) can be constantly guided at a predetermined, fixed distance above the rail (2) by means of the supporting device (26) and with respect to the respective support position of the supporting device (26) on the rail (2), **characterized in that**
the wheels (18) are arranged in pairs one behind the other on the measuring carriage (16) in the direction of travel of the measuring carriage (16) and of these a first and at least a second pair of wheels is formed, wherein the first pair of wheels is arranged at a first axial spacing (40) from one another in the direction of travel of the measuring carriage (16) and the second pair of wheels is arranged in the same direction at a second axial spacing (41) from one another, wherein the first axial spacing (40) and the second axial spacing (41) are selected to be at least 20% different to each other, and the ratio of the two axial spacings (40, 41) to one another does not form a natural number.

13. The measuring system (19) according to Claim 12, **characterized in that** the supporting device (26) for the measurement base carrier (22) comprises at least one support wheel (31).

14. The measuring system (19) according to Claim 13, **characterized in that** the at least one support wheel (31) is formed by a ball bearing and the ball bearing is provided with a damping layer (25) on its circumferential outer surface, in particular made of an elastomeric material.

15. The measuring system (19) according to one of Claims 12 to 14, **characterized in that** the wheels (18) of the measuring carriage (16) are formed by ball bearings and the ball bearings are provided with a damping layer (25) on their circumferential outer surface, in particular made of an elastomeric material.

16. The measuring system (19) according to one of Claims 12 to 15, **characterized in that** the at least one first sensor (24) is configured to determine the surface roughness on one of the rails (2).

17. The measuring system (19) according to one of Claims 12 to 16, **characterized in that** the first measuring arrangement (21) comprises at least one second sensor (27) and the at least one second sensor (27) is configured to determine the relative displacement of the at least one first sensor (24) with respect to the carriage frame (17) of the measuring carriage (16) during the displacement of the measuring carriage (16) along the rails (2).

18. The measuring system (19) according to one of Claims 12 to 17, **characterized in that** the measuring unit (14) further comprises a path measuring device (28) and the path measuring device (28) is configured to determine the path covered by the measuring carriage (16) during the displacement of the measuring carriage (16) along the rails (2).

19. The measuring system (19) according to one of Claims 12 to 18, **characterized in that** the measuring unit (14) further comprises at least a second measuring arrangement (29) and the second measuring arrangement (29) is configured identically to the first measuring arrangement (21).

## Revendications

1. Procédé de détermination de la qualité de surface d'au moins un champignon de rail (5), en particulier de sa surface de roulement (10), le long d'une file de rails (1) disposée et formée par des rails (2), au moins un plan de rail (13) étant défini par chacun des deux rails (2), et dans lequel les étapes suivantes sont accomplies :
mise à disposition d'un chariot de mesure (16) avec un châssis du chariot (17) et des roues (18) montées de manière rotative sur le châssis du chariot (17), le châssis du chariot (17) étant soutenu par les roues (18) sur au moins un des rails (2) et pouvant être déplacé le long des rails (2),
mise à disposition d'une unité de mesure (14) avec au moins un premier dispositif de mesure (21) avec un support de base de mesure (22), un dispositif de guidage (23) et au moins un premier capteur (24), l'au moins un premier capteur (24) étant agencé sur le support de base de mesure (22) et le dispositif de guidage (23) étant pour sa part agencé sur le châssis du chariot (17), le support de base de mesure (22) étant guidé de manière à pouvoir se déplacer par rapport au châssis du chariot (17) au moyen du dispositif de guidage (23), de préférence dans une orientation normale par rapport au plan de rail (13) respectif, et
déplacement du chariot de mesure (16) le long des rails (2) et détermination de la qualité de surface d'au moins un champignon de rail (5) d'au moins un rail (2),
le support de base de mesure (22) ainsi que le premier capteur (24) étant soutenus mécaniquement sur l'au moins un rail (2) au moyen d'un dispositif de support (26) pendant le déplacement du chariot de mesure (16) le long des rails (2), et l'au moins un premier capteur (24) étant guidé le long du rail (2) à une distance fixe prédéterminée au-dessus du rail (2) pendant le déplacement du chariot de mesure (16) au moyen du dispositif de support (26) et par rapport à la position de support respective du dispositif de support (26), **caractérisé en ce que** les roues (18) sont agencées par paires sur le chariot de mesure (16) dans le sens de déplacement du chariot de mesure (16), une première paire de roues et au moins une deuxième paire de roues étant formées par chacune d'elles, la première paire de roues étant agencée à une première distance axiale (40) l'une de l'autre dans le sens de déplacement du chariot de mesure (16) et la deuxième paire de roues étant agencée à une deuxième distance axiale (41) l'une de l'autre dans le même sens, la première distance axiale (40) et la deuxième distance axiale (41) étant choisies de manière à s'écarter l'une de l'autre d'au moins 20 % et à ce que le rapport entre les deux distances axiales (40, 41) ne soit pas un nombre naturel.

2. Procédé selon la revendication 1, **caractérisé en ce que** le dispositif de support (26) du support de base de mesure (22) est formé par au moins une roue de support (31).

3. Procédé selon la revendication 2, **caractérisé en ce que** l'au moins une roue de support (31) est constituée d'un roulement à billes et que la surface extérieure périphérique du roulement à billes est pourvue d'une couche d'amortissement (25), en particulier en matériau élastomère.

4. Procédé selon l'une des revendications précédentes, **caractérisé en ce que** les roues (18) du chariot de mesure (16) sont constituées de roulements à billes et que les roulements à billes sont pourvus chacun d'une couche d'amortissement (25) sur leurs surfaces extérieures périphériques, en particulier en matériau élastomère.

5. Procédé selon l'une des revendications précédentes, **caractérisé en ce que** la rugosité de surface de l'un des rails (2) est déterminée par l'au moins un premier capteur (24).

6. Procédé selon l'une des revendications précédentes, **caractérisé en ce que** le premier dispositif de mesure (21) est équipé d'au moins un deuxième capteur (27) et que, pendant le déplacement du chariot de mesure (16) le long des rails (2), le déplacement relatif d'au moins un premier capteur (24) par rapport au châssis (17) du chariot de mesure (16) est déterminé par l'au moins un deuxième capteur (27).

7. Procédé selon l'une des revendications précédentes, **caractérisé en ce que** pendant le déplacement du chariot de mesure (16) le long des rails (2), la distance parcourue par le chariot de mesure (16) est déterminée au moyen d'un dispositif de mesure de déplacement (28) de l'unité de mesure (14).

8. Procédé selon la revendication 7, **caractérisé en ce que** le dispositif de mesure de déplacement (28) est formé ou défini par une roue de mesure de déplacement propre et/ou par une des roues (18) et/ou par la roue de support (31) formant l'au moins un dispositif de support (26).

9. Procédé selon l'une des revendications précédentes, **caractérisé en ce que** l'unité de mesure (14) est en outre équipée d'au moins un deuxième dispositif de mesure (29) et le deuxième dispositif de mesure (29) est conçu de la même manière que le premier dispositif de mesure (21) et la qualité de surface d'au moins l'un des deux rails (2) est déterminée par les deux dispositifs de mesure (21, 29).

10. Procédé selon l'une des revendications précédentes, **caractérisé en ce que** les valeurs de mesure déterminées par l'unité de mesure (14) sont transmises ou transférées à un dispositif d'évaluation (15) et qu'un protocole d'évaluation ou de mesure est généré à partir des valeurs de mesure.

11. Procédé selon l'une des revendications précédentes, **caractérisé en ce que** la détermination de la qualité de surface est réalisée immédiatement après un processus d'usinage sur l'au moins un rail (2).

12. Installation de mesure (19) pour déterminer la qualité de surface d'au moins un champignon de rail (5), en particulier de sa surface de roulement (10), le long d'une file de rails (1) disposée et formée par des rails (2), au moins un plan de rail (13) étant défini par chacun des deux rails (2), l'installation de mesure (19) comprenant
- un chariot de mesure (16) avec un châssis du chariot (17) et des roues (18) montées de manière rotative sur le châssis du chariot (17), le châssis du chariot (17) pouvant s'appuyer sur au moins un des rails (2) au moyen des roues (18) et se déplacer le long des rails (2),
- une unité de mesure (14) avec au moins un premier dispositif de mesure (21) avec un support de base de mesure (22), un dispositif de guidage (23) et au moins un premier capteur (24), l'au moins un premier capteur (24) étant agencé sur le support de base de mesure (22) et le dispositif de guidage (23) étant quant à lui agencé sur le châssis du chariot (17), le support de base de mesure (22) étant en outre guidé de manière à pouvoir être déplacé par rapport au châssis du chariot (17) au moyen du dispositif de guidage (23), de préférence dans une orientation normale par rapport au plan de rail (13) respectif, en particulier pour la mise en œuvre du procédé de détermination de la qualité de surface selon l'une des revendications précédentes,
le support de base de mesure (22) pouvant être soutenu mécaniquement sur au moins un rail (2) avec l'au moins un premier capteur (24) pour déterminer la qualité de surface au moyen d'un dispositif de support (26), et
l'au moins un premier capteur (24) peut être déplacé le long du rail (2) à une distance fixe prédéterminée au-dessus du rail (2) pendant le déplacement du chariot de mesure (16) au moyen du dispositif de support (26) et par rapport à la position de support respective du dispositif de support (26), **caractérisé en ce que** les roues (18) sont agencées par paires l'une derrière l'autre sur le chariot de mesure (16) dans le sens de déplacement du chariot de mesure (16), et que chacune d'elles forme une première paire de roues et au moins une deuxième paire de roues, la première paire de roues étant agencée à une première distance axiale (40) l'une de l'autre dans le sens de déplacement du chariot de mesure (16) et la deuxième paire de roues étant agencée à une deuxième distance axiale (41) l'une de l'autre dans le même sens, la première distance axiale (40) et la deuxième distance axiale (41) étant choisies de manière à s'écarter l'une de l'autre d'au moins 20 % et à ce que le rapport entre les deux distances axiales (40, 41) ne soit pas un nombre naturel.

13. Installation de mesure (19) selon la revendication 12, **caractérisée en ce que** le dispositif de support (26) pour le support de base de mesure (22) comprend au moins une roue de support (31).

14. Installation de mesure (19) selon la revendication 13, **caractérisée en ce que** l'au moins une roue de support (31) est constituée d'un roulement à billes et que la surface extérieure périphérique du roulement à billes est pourvue d'une couche d'amortissement (25), en particulier en matériau élastomère.

15. Installation de mesure (19) selon l'une des revendications 12 à 14, **caractérisée en ce que** les roues (18) du chariot de mesure (16) sont constituées de roulements à billes et que les roulements à billes sont pourvus chacun d'une couche d'amortissement (25) sur leurs surfaces extérieures périphériques, en particulier en un matériau élastomère.

16. Installation de mesure (19) selon l'une des revendications 12 à 15, **caractérisé en ce que** l'au moins un premier capteur (24), destiné à déterminer la rugosité de surface, est agencé sur l'un des rails (2).

17. Installation de mesure (19) selon l'une des revendications 12 à 16, **caractérisé en ce que** le premier dispositif de mesure (21) comprend au moins un deuxième capteur (27) et que l'au moins un deuxième capteur (27) est conçu pour déterminer le déplacement relatif de l'au moins un premier capteur (24) par rapport au châssis (17) du chariot de mesure (16) pendant le déplacement du chariot de mesure (16) le long des rails (2).

18. Installation de mesure (19) selon l'une des revendications 12 à 17, **caractérisée en ce que** l'unité de mesure (14) comprend en outre un dispositif de mesure de déplacement (28) et le dispositif de mesure de déplacement (28) est conçu pour déterminer la distance parcourue par le chariot de mesure (16) pendant le déplacement du chariot de mesure (16) le long des rails (2).

19. Installation de mesure (19) selon l'une des revendications 12 à 18, **caractérisée en ce que** l'unité de mesure (14) comprend en outre au moins un deuxième dispositif de mesure (29) et le deuxième dispositif de mesure (29) est conçu de manière similaire au premier dispositif de mesure (21).
